(19)

Europäisches
Patentamt

European
Patent Office

Office européen
des brevets

(11)     **EP 2 899 584 B1**

(12)     **EUROPEAN PATENT SPECIFICATION**

(45) Date of publication and mention
of the grant of the patent:
**11.03.2020  Bulletin 2020/11**

(51) Int Cl.:
***G02C 13/00*** (2006.01)     ***G02C 7/00*** (2006.01)
***G02C 7/06*** (2006.01)     ***G02C 7/02*** (2006.01)

(21) Application number: **13839259.2**

(22) Date of filing: **19.09.2013**

(86) International application number:
**PCT/JP2013/075356**

(87) International publication number:
**WO 2014/046207 (27.03.2014 Gazette 2014/13)**

(54) **SPECTACLE LENS DESIGN METHOD, SPECTACLE LENS MANUFACTURING METHOD, SPECTACLE LENS SELECTION METHOD, MEASURING SYSTEM AND MEASURING METHOD**

VERFAHREN ZUM ENTWURF EINES BRILLENGLASES, VERFAHREN ZUR HERSTELLUNG EINES BRILLENGLASES, VORRICHTUNG ZUR AUSWAHL EINES BRILLENGLASES, MESSSYSTEM UND MESSVERFAHREN

PROCÉDÉ DE CONCEPTION D'UN VERRE DE LUNETTES, PROCÉDÉ DE FABRICATION D'UN VERRE DE LUNETTES, PROCÉDÉ DE SÉLECTION D'UN VERRE DE LUNETTES, SYSTÈME DE MESURE ET PROCÉDÉ DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2012  JP 2012205453
19.09.2012  JP 2012206295**

(43) Date of publication of application:
**29.07.2015  Bulletin 2015/31**

(73) Proprietor: **Nikon Corporation
Tokyo 108-6290 (JP)**

(72) Inventor: **UNO, Daisuke
Tokyo 100-8331 (JP)**

(74) Representative: **Viering, Jentschura & Partner mbB
Patent- und Rechtsanwälte
Grillparzerstraße 14
81675 München (DE)**

(56) References cited:
**EP-A1- 2 340 760       JP-A- H08 563
JP-A- H0 847 481        JP-A- H05 100 147
JP-A- H11 353 353       JP-A- 2003 131 176
JP-A- 2005 135 202      JP-A- 2007 136 000
JP-A- 2007 232 753      JP-A- 2007 289 683
JP-A- 2008 212 718      JP-A- 2010 259 605
JP-A- 2011 138 064      JP-A- 2012 022 288
US-A1- 2004 189 935     US-A1- 2011 007 269**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a spectacle lens design method, a spectacle lens manufacturing method, a spectacle lens selection method, a measurement system, and a measurement method.

BACKGROUND ART

A so-called line of sight detection device that has a means to detect a position the subject observes has been developed. The line of sight detection device includes a camera for capturing an image of eyeballs and obtains line of sight (or visual line) information such as a gaze point (or point of attraction) or a direction of line of sight from the images of the pupils captured by the camera. A technique known in the art irradiates infrared light at a front side of the eyeballs, captures images formed by the infrared light reflected by the cornea using the eyeball imaging camera in addition to or in place of the pupil image, and calculates the gaze point or the direction of line of sight to further increase the precision of the line of sight information.

The line of sight information detection device of the type equipped with an eyeball imaging camera that is wearable by a photographed person is known from, for instance, PTL 1, which discloses the configuration of the eyeball imaging camera to be attached at a fixing portion that extends from a portion attached to the head toward the front of the eyeball.

This device undergoes a so-called calibration stage in which a subject gazes at anywhere from two to nine marks placed in front of the subject to capture images of the gazing eyeballs. Once the calibration is done, the device can calculate where the subject sees when he turns his face in any desired direction based on the images of the eyeballs in that direction and the calibrated images of eyeballs. Thus, the device can calculate direction of line of sight, gaze point, and angle of rotation of eyeball.

The line of sight information detection device of the type equipped with an eyeball imaging camera installed at a desk instead of being worn by the subject is known from PTL 2, which discloses that the eyeball imaging camera that is installed at a desk captures images of the eyeball of the subject. This device has the same construction as that of the device disclosed in PTL 1 regarding the method of calibration and calculation of the line of sight in any desired direction after the calibration.

The device of PTL 2 avoids need of installing the device at the subject to eliminate troublesome operations. However, it fails to distinguish seeing sideward by rotating only the eyeballs from seeing sideward by rotation of the eyeballs along with rotation of the head so that most of such desktop-installed devices need means for detecting a head to detect the movement of the head of the subject.

However, these conventional line of sight detection devices allow for no correction in the calculation of the direction of line of sight or angle of rotation of eyeballs when the subject wears optical means that changes the line of sight, such as eyeglasses. The conventional devices calculate such parameters under assumption that the line of sight, which connects the center of rotation with the gaze point, is fixed. Consequently, if the subject wears optical means with a changeable direction of line of sight, such as eyeglasses, the detected direction of line of sight or angle of rotation tends to have an error.

Attempts to improve calibration have been made to reduce such an error. The improvement of calibration includes, for instance, increasing the counts in calibration and improving calibration point. However, these improved measurements fail to remove causes of change in the direction of line of sight and allow measurable errors to remain. Such an error is considerably large for a progressive power lens having an asymmetrical shape. The improvement of calibration includes changing sample counts or changing the positions of sample points of calibration samples depending on the degree of asphericity or degree of asymmetry of the shape of lens surface. For example, for an area where an abrupt change in the shape of surface occurs, the density of sample points is adjusted to increase accordingly. Thus, uniform treatment is difficult to apply.

NPTL 1 discloses experiments of detection of line of sight using a conventional line of sight information detection device for a subject who wears a progressive power lens. This article evaluates the results of the experiments obtained by the conventional line of sight information detection device without correction of errors. The errors obtained with the progressive power lenses may vary depending on the prescribed optical powers (power S, power C, axis of astigmatism), add (abbreviation for "addition") or progressive zone length. Thus, the progressive power lenses need to be corrected individually. That is, three subjects participated in the experiments and the results of the experiments should have been estimated after correction of the respective results on all the three subjects.

Corrections should be made for any results obtained using the conventional line of sight detection device on those subjects who wear optical means that changes the direction of the line of sight, such as eyeglasses, in front of the eyes, particularly, those who wear optical means with high asymmetry such as progressive power lenses,. However, no such corrections are made at present.

Also, a device is known in the art that measures parameters for wearing eyeglasses by a subject based on images of the front face and lateral face of the subject who wears eyeglasses (cf., PTL 3). Other devices for measuring the line of sight of a subject are described in US2011/007269, US2004/189935 and EP2340760.

CITATION LIST

PATENT LITERATURE

PTL 1: Japanese Patent Publication No. H06-53107:
PTL 2: Japanese Laid-open Patent Publication No. H10-66678
PTL 3: Japanese Laid-open Patent Publication No. 2010-266892

NON-PATENT LITERATURE

NPTL1: "Journal of the Eye", vol. 24, No. 9, 2007

SUMMARY OF INVENTION

TECHNICAL PROBLEM

The conventional line of sight detection devices allow for no calculation of direction of line of sight or angle of rotation of eyeballs when the subject wears optical means, such as eyeglasses, that diffracts light before it enters the eyeballs. The conventional devices calculate such parameters under the assumption that a line of sight connecting the center of rotation with the gaze point is fixed. Consequently, if the subject wears optical means with a changeable direction of line of sight, such as eyeglasses, the detected direction of line of sight or angle of rotation has an error because the actual line of sight of the subject is refracted depending on the position at which the optical instrument is attached.

This error is non-negligible in designing lenses. Actually, lenses were prepared according to the design determined based on the results of the experiments on a subject using the conventional line of sight detection device and the subject wore the obtained lenses. Then, the aberration the subject actually felt differed from the aberration designed leads to his dissatisfaction. This is caused by a difference between the line of sight used in the design of the lenses and the actual line of sight of the subject.

In addition, the conventional line of sight information detection devices do not take account of changes in the condition of the eyeglasses worn by the subject who is moving.

SOLUTION TO PROBLEM

The present invention provides a measurement system according to claim 1, a measurement method according to claim 9, a spectacle lens design method according to claim 13, spectacle lens selection method according to claim 14, and a spectacle lens manufacturing method according to claim 15. Further embodiments of the invention are described in dependent claims.

ADVANTAGEOUS EFFECTS OF INVENTION

The present invention enables the measurement of changes in the condition of wearing eyeglasses by the subject.

BRIEF DESCRIPTION OF DRAWINGS

[FIG. 1] FIG. 1 is a perspective view showing the construction of a line of sight detection device according to an example;
[Fig. 2] FIG. 2 is diagram showing the construction of a line of sight information correction device according to the example;

[Fig. 3] FIG. 3 is a diagram indicating the positional relation between an eyeball imaging camera according to the example and the eyeballs of the subject;

[Fig. 4] FIG. 4 is a diagram indicating the positional relation between an eyeball imaging camera according to the example and the eyeballs of the subject;

[Fig. 5] FIG. 5 is a diagram indicating the line of sight of a subject who wears the eyeglasses according to the example.

[Fig. 6] FIG. 6 is an astigmatism diagram of the lens according to the example;

[Fig. 7] FIG. 7 is a flowchart illustrating the procedure for correcting errors of line of sight according to the example;

[Fig. 8] FIG. 8 is a perspective view showing another construction of the line of sight detection device according to the example;

[Fig. 9] FIG. 9 is a diagram illustrating a form of evaluation of the results of the line of sight information detection according to the example;

[Fig. 10] FIG. 10 is a flowchart illustrating a lens design method according to the example;

[Fig. 11] FIG. 11 is a flowchart illustrating a lens design method according to the example;

[Fig. 12] FIG. 12 is a flowchart illustrating a lens selection method according to the example;

[Fig. 13] FIG. 13 is a table of basic data of the shape of the eyeglasses according to Practical Example 1 of the example;

[Fig. 14] FIG. 14 is an example of a table of exemplary basic data on the shape of the eyeglasses according to Practical Example 1;

[Fig. 15] FIG. 15 is a diagram indicating information about transmitted light through a lens of the eyeglasses according to Practical Example 1;

[Fig. 16] FIG. 16 is a diagram indicating information about transmitted light through a lens of the eyeglasses according to Practical Example 1;

[Fig. 17] FIG. 17 is a diagram indicating information about transmitted light through a lens of the eyeglasses according to Practical Example 1;

[Fig. 18] FIG. 18 is a table of basic data of the shape of the eyeglasses according to Practical Example 2 of the example;

[Fig. 19] FIG. 19 is a table of exemplary basic data on the shape of the eyeglasses according to Practical Example 2;

[Fig. 20] FIG. 20 is a diagram indicating information about transmitted light through a lens of the eyeglasses according to Practical Example 2;

[Fig. 21] FIG. 21 is a diagram indicating information about transmitted light through a lens of the eyeglasses according to Practical Example 2;

[Fig. 22] FIG. 22 is a diagram indicating information about transmitted light through a lens of the eyeglasses according to Practical Example 2;

[Fig. 23] FIG. 23 is a table of exemplary basic data on the shape of the eyeglasses according to Practical Example 2;

[Fig. 24] FIG. 24 is a table of basic data of the shape of the eyeglasses according to Practical Example 3 of the example;

[Fig. 25] FIG. 25 is a table of basic data of the shape of the eyeglasses according to Practical Example 3;

[Fig.26] FIG. 26 is a diagram indicating information about transmitted light through a lens of the eyeglasses according to Practical Example 3;

[Fig.27] FIG. 27 is a diagram indicating information about transmitted light through a lens of the eyeglasses according to Practical Example 3;

[Fig.28] FIG. 28 is a table of exemplary basic data on the shape of the eyeglasses according to Example 3;

[Fig. 29] FIG. 29 is a diagram illustrating a form of evaluation of the results of the line of sight information detection according to Practical Example 3;

[Fig. 30] FIG. 30 is a diagram illustrating a form of evaluation of the results of the line of sight information detection according to Practical Example 4 of the example;

[Fig. 31] FIG. 31 is a diagram illustrating a form of evaluation of the results of the line of sight information detection according to Practical Example 4;

[Fig. 32] FIG. 32 is a schematic diagram illustrating an eyeglass wearing condition measuring system according to an embodiment of the present invention;

[Fig. 33] FIG. 33 is diagram illustrating the construction of an eyeglasses imaging device; [Fig. 34] FIG. 34 is a diagram illustrating marks made on eyeglasses;

[Fig. 35] FIG. 35 is a diagram illustrating an exemplary display of a captured image of eyeglasses;

[Fig.36] FIG. 36 is a diagram illustrating how to calculate an amount of change in position of the eyeglasses;

[Fig.37] FIG. 37 is a diagram illustrating how to calculate an amount of change in position of the eyeglasses according to Variation Example 1;

[Fig.38] FIG. 38 is diagram illustrating the construction of an eyeglasses imaging device according to Variation Example 2;

[Fig. 39] FIG. 39 is a diagram illustrating points at which the line of sight of the subject transmits the eyeglasses;

[Fig. 40] FIG. 40 is diagram illustrating marks made on the eyeglasses according to Variation Example 3;

[Fig. 41] FIG. 41 is diagram illustrating how to provide a program to a computer in the example;

[Fig. 42] FIG. 42 is flowchart illustrating the execution of the program in the embodiment; and
[Fig. 43] FIG. 43 is diagram illustrating a line of sight information correction system according to the example.

DESCRIPTION OF EMBODIMENTS

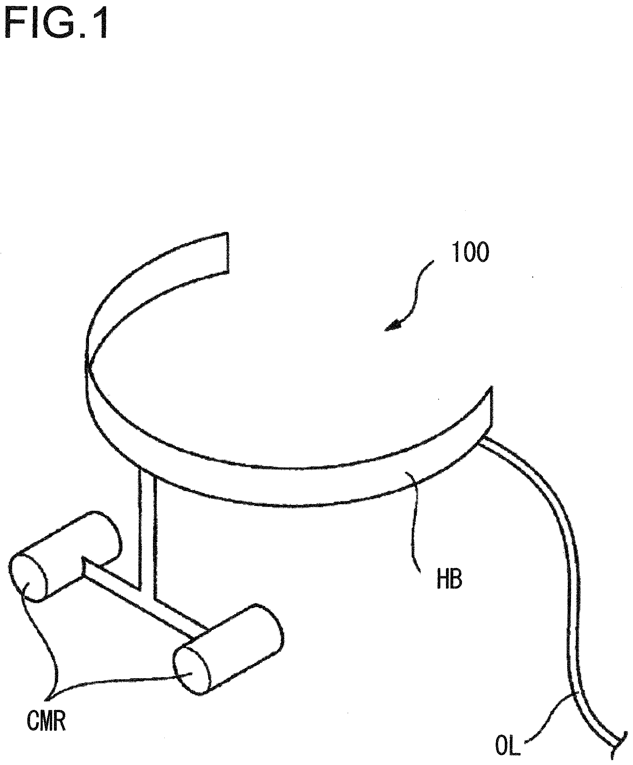

FIG. 1 is a perspective view showing the components of a line of sight detection device 100 according to an example. As shown in FIG. 1, the line of sight detection device 100 includes a headband HB, an eyeballs imaging camera CMR, and an output cable OL. The line of sight detection device 100 may be, for instance, EMR-9 available from nac Image Technology, Inc., or AA-ETL-400B or AA-ETL-500B available from ISCAN Inc..

The headband HB is put on the head of a subject. The eyeball imaging camera CMR takes a photograph of the pupil of the subject with the headband HB being put on him. The eyeball imaging camera CMR may include a processing unit, which is not shown in the figures, that calculates a position at which the subject gazes based on the result of the shooting by the eyeball imaging camera CMR. The line of sight detection device 100 may also include a light emission unit that emits infrared light for detecting the apex of cornea of the eyeball of the subject or a field of view camera for imaging a forward visual field in front of the subject.

For any line of sight detection device 100 that includes a field of view camera, the field of view camera needs to be attached to a position that allows for movements synchronized with the movements of the head to enable imaging of the field of view continuously regardless of the movements of the head. In case two such cameras are used, they are attached to positions just above the respective eyeballs, for instance, onto a headband on the head to achieve closer approximation to the actual field of view. To achieve still closer approximations to the actual field of view, they are attached as hanging from the headband. If only one field of view camera is to be installed, preferably it is installed to the headband in the center of the eyes, i.e., just above the nose, preferably at the height of the eyes similarly.

For any line of sight information detection unit including one or more field of view camera, it is important to correct the distortion of the field of view camera. To design a progressive power lens contemplated by the inventors of the present application, an error of 1 to 2 mm is unacceptable. A common field of view camera has a larger distortion at a position remoter from its center. In particular, it has a large distortion at its periphery. In addition, to design a spectacle lens (or an eyeglass lens) capable of covering a wide field of view, the field of view camera includes a wide-angle lens as its lens (hereafter, referred to as "field of view lens"). This field of view lens has a larger distortion as its view angle increases and thus is disadvantageous in detecting line of sights. Actual use of a 90 degree angle of view causes the coordinates of an object to shift due to this large distortion. The provided line of sight information has an unacceptable error. Subsequently, use of a field of view camera having a wider angle of view provided line of sight information having a larger unacceptable error. Consequently, for any line of sight detection device 100 that includes a field of view camera additionally includes a distortion correction unit that corrects the distortion of the field of view camera.

The method of correction used at the distortion correction unit may be a method that includes obtaining distortion information including distortion from the design information of field of view lenses if such is available and performing correction to cancel the distortion information. The method of connection may be a method that includes taking a photograph of paper that has a grid pattern on it and is placed at a distance of, for instance, several meters from the camera, obtaining distortion information from the captured image by actual measurement, and performing correction to cancel the distortion information. Both the methods, which additionally use the distortion correction means that corrects the distortion of the field of view camera, enable correction of the object point to provide line of sight information with a decreased error. This allows providing line of sight information with a still smaller error than conventionally and an intersection point of the line of sight and the lens with a still smaller error than conventionally accordingly. All these allow designing and providing lenses that are more adapted to the line of sight of the wearer than conventionally, which in turn enables providing lenses having a high level of client satisfaction.

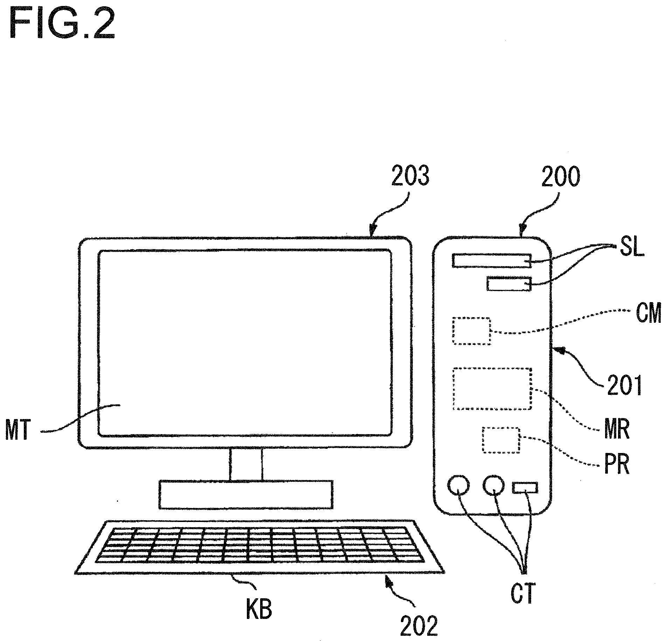

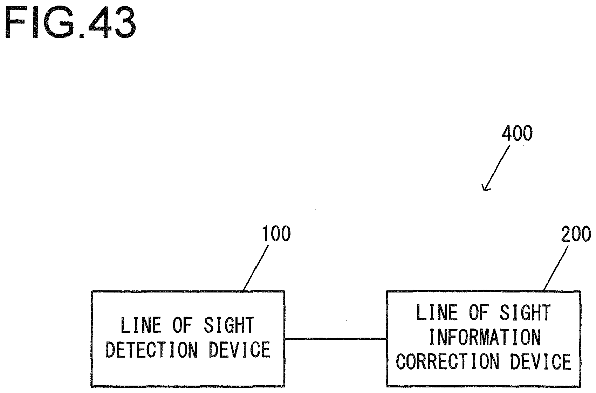

FIG. 2 is a diagram showing the components of a line of sight information correction device 200 according to this example. As shown in FIG. 2, the line of sight information correction device 200 used in this example is a general-purpose personal computer. The line of sight information correction device 200 includes a main unit 201, an input unit 202, and an output unit 203. The line of sight information correction device 200 may be a different device other than the general-purpose personal computer, for instance, a dedicated device. The line of sight information correction device 200 may be of a small size and incorporated in the line of sight detection device 100. The line of sight detection device 100 of FIG. 1 and the line of sight information correction device 200 of FIG. 2 constitute a line of sight information correction system 400 as shown in FIG. 43.

In FIG. 2, The main unit includes a connection terminal CT that allows for wire-line connection of, for instance, a universal serial bus (USB) terminal or a general-purpose terminal, a communication unit CM that performs wired communication with the external to exchange information, a slot SL that allows insertion of an optical recording medium such as a compact disc (CD) or a digital versatile disc (DVD) or a magnetic recording medium such as a secure digital (SD) card, a memory unit such as a hard disk drive arranged in the inside of the main unit, and a processing unit PR that includes a central processing unit (CPU) and a memory and performs controlling processing.

The main unit 201 is connectable to the output cable OL of the line of sight detection device 100 via, for instance, the connection terminal CT. The line of sight information correction device 200 and the line of sight information detection device may be wirelessly connected via the communication unit CM. Alternatively, a recording medium such as an optical recording medium or a magnetic recording medium having stored the results output from the line of sight detection device 100 may be inserted into the slot ST to allow the information to be read by the main unit 201.

The output unit includes an image display unit MT such as a display. The image display unit MT outputs information, for instance, via the main unit 201. The information via the main unit 201 can be output via the connection terminal CT or the slot SL, or it can be output to the memory unit MR. Use of the general-purpose personal computer is advantageous in that it allows easy operation.

Next, how a subject who wears eyeglasses acts when he detects a line of sight using the line of sight detection device 100 and the line of sight information correction device 200 is explained.

First, the reason that the subject has to use line of sight information correction device 200 when he wears eyeglasses and uses the line of sight detection device 100 is explained.

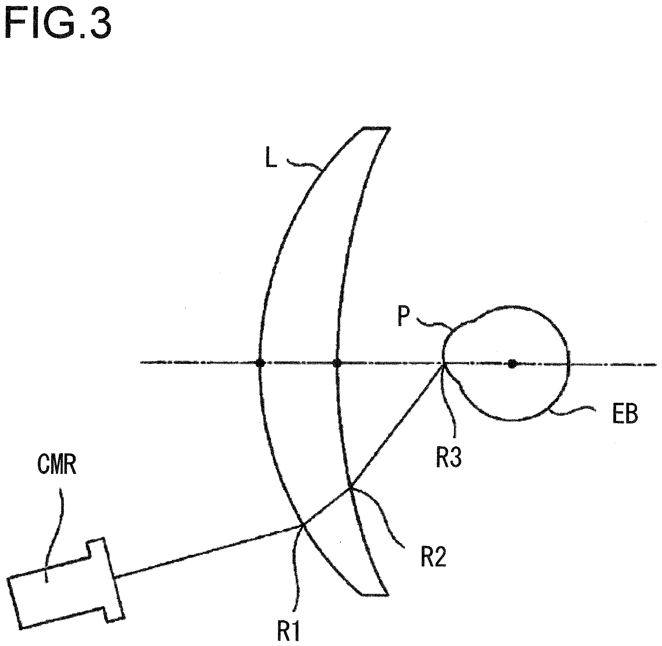

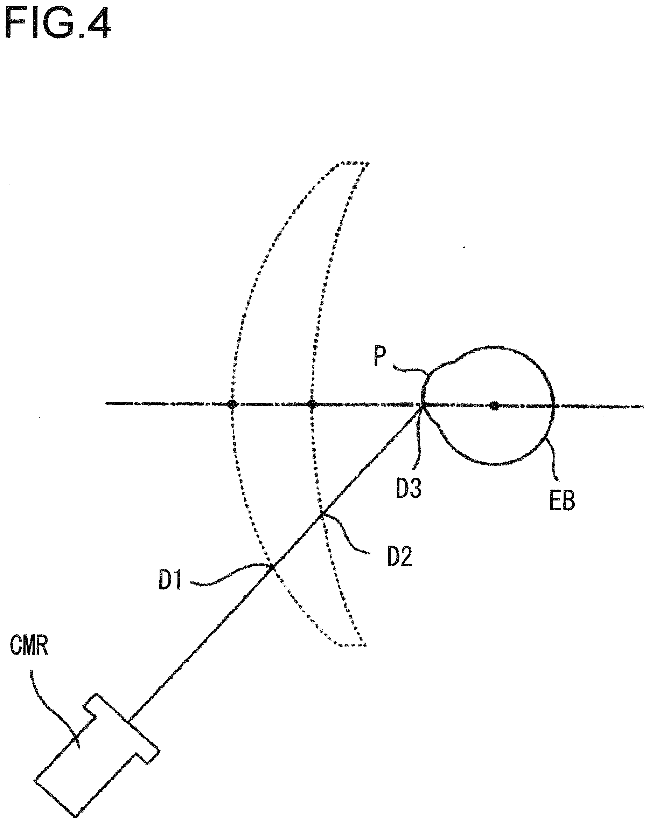

FIGS. 3 and 4 are diagrams each showing the positional relation between the eyeball imaging camera CMR and an eyeball EB of the subject. FIG. 3 relates to the subject who wears a spectacle lens L and FIG. 4 relates to the subject who wears no spectacle lens L.

In the case shown in FIG. 3, the eyeball imaging camera CMR is adjusted to enable imaging of the eyeball of the subject who wears the spectacle lens L. Specifically, the position of the eyeball imaging camera CMR is adjusted to allow imaging of the eyeball EB of the subject who wears the eyeglasses. Specifically, the position of the eyeball imaging camera CMR is adjusted to allow imaging of a pupil P of the subject via the spectacle lens L.

In the case shown in FIG. 4, the position of the eyeball imaging camera CMR is adjusted to allow directly imaging the pupil P of the subject. FIG. 4 illustrates an example of imaging by the eyeball imaging camera in which the eyeball of the subject who wears no spectacle lens as an instrument that changes the direction of the line of sight of the subject.

In FIGS. 3 and 4, the eyeball EB faces in the same direction. However, the direction (R2 → R3) in which the pupil is shot through the spectacle lens L as shown in FIG. 3 differs from the direction (D2 → D3) in which the pupil is shot in FIG. 4. This is caused by the refraction of light through the spectacle lens L. Thus, this example uses the spectacle lens L as an optical instrument for refracting light to be input into the eyeball. FIGS. 3 and 4 show different images of the pupil shot by the eyeball imaging camera CMR. This may cause errors in the position of the eyeball, line of sight, and rotation angle of the eyeball of the subject calculated from the captured images.

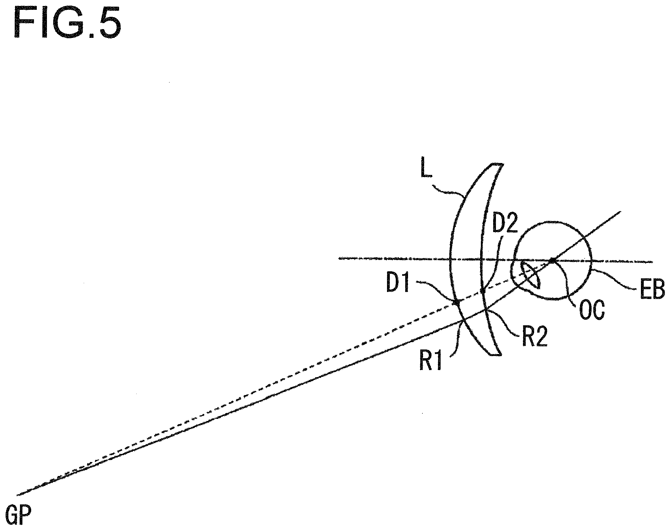

FIG. 5 shows an example of the line of sight observed when a subject, who wears the spectacle lens L as an optical instrument that refracts light to enter the eyeball, sees a gaze point GP. A straight line connecting the gaze point GP with a center of rotation OC of the eyeball EB intersects the spectacle lens at D1, which is an intersection point of the straight line with the surface of the lens, and at D2, which is an intersection point of the light line with the rear surface of the lens.

In contrast, the light path of actual light fails to be expressed by a single straight line due to the refraction by the spectacle lens and the light beam intersects the surface of the spectacle lens at an intersection point R1 and the rear surface of the spectacle lens at an intersection point R2. Thus, D1 differs from R2 and D2 differs from R2. Consequently, the direction of line of sight obtained by the line of sight detection device 100 (OC → D2) differs from the direction of line of sight of the subject (OC → R2). For the same reason, the angle of rotation of eyeball of the subject calculated from the direction of line of sight shows a difference between the detected value and the actual value.

That is, if the subjects wears an optical instrument that refracts light to be input into the eyeball, such as eyeglasses, for instance, the direction of line of sight and the angle of rotation of eyeball obtained with the line of sight detection device 100 may have an error. The error is considerably large for searching a particular position on the spectacle lens L through which the subject who wears the eyeglasses looks at the object or in designing a spectacle lens based on the result of the search.

For instance, progressive power lenses have high astigmatism at a position several millimeters (mm) away in the horizontal direction from a position on the meridian where astigmatism is low to cause blurring or distortion. In searching to what extent such blurring or distortion is acceptable, an error of 1 to 2 mm is considerably large.

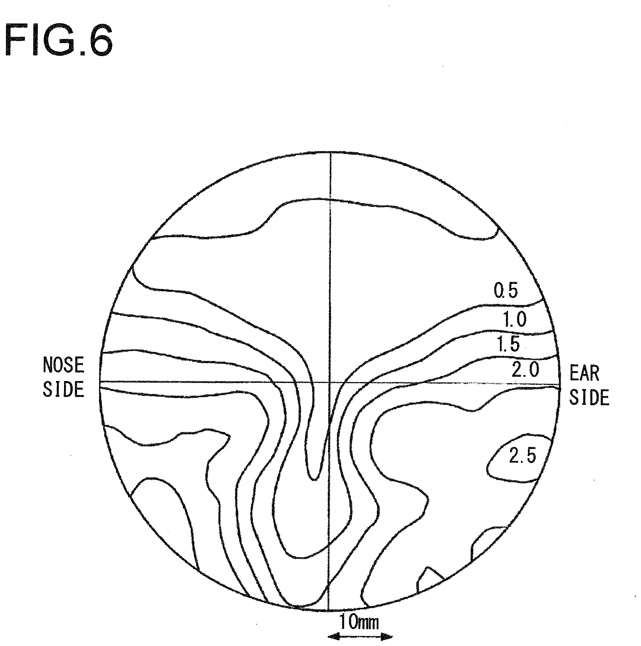

For instance, FIG. 6 is an astigmatism diagram of a lens at an addition power (add) of 3. In this diagram, a position 10 mm below the center and at a distance of 3 mm from the center on the right of the center line in the horizontal direction (on a zone indicted by a double-headed arrow) has an astigmatism level of 1.0 diopter (Dpt), which is in many cases acceptable. On the other hand, a position at a distance of 5 mm from the center in the horizontal direction has an astigmatism level of 1.5 Dpt, which is a value acceptable or unacceptable depending on the subject. Thus, a difference of 2 mm provides a different performance and it is effective to eliminate an error of even several millimeters (mm).

In the vertical direction, an error of 2 mm is significant. A value relating to progressive power lenses called "progressive zone length" is known in the art to indicate how far downward a reference point for reading upon near vision is. A lens having a progressive zone length of 12 mm and a lens having a progressive zone length of 14 mm have their performances differing greatly from each other.

Thus, elimination of errors of even several millimeters (mm) is effective in particular for spectacle lenses. To achieve this, a certain correction is needed. That is, for any subject who wears his eyeglasses when he uses the line of sight detection device 100, the direction of line of sight and the angle of rotation of eyeball detected by the line of sight detection device 100 are corrected by the line of sight information correction device 200.

Any line of sight detection device 100 including a field of view imaging unit preferably meets the following specification to eliminate any error of 1 to 2 mm for a design with the precision intended by the present invention, for which an error of 1 to 2 mm is disadvantageous. To achieve the design intended by the present invention, the line of sight detection device 100 needs to have a precision having the order of 0.1 mm or higher precision. Assuming that the width of the lens in the horizontal direction is D (mm), the distance between the apices of cornea of the wearer is D1 (mm), the distance between the apex of cornea of the wearer and the center of rotation is D2 (mm), the total angle of view of the field of view imaging unit is equal to or greater than atan (D / (2 × (D1 + D2))) × 2 and number of pixels of the field of view imaging unit in the horizontal direction is equal to or greater than D / 0.1. This is caused by the necessity that the field of view be covered for the lens with the horizontal width of D (mm) that the subject wears and the necessity that the detection precision be 0.5 mm for the horizontal width D (mm). In case the subjects wears, for instance, eyeglasses having a horizontal width of 75 mm and has a distance between the apices of corneas of 12 mm and a distance from the apex of cornea to the center of rotation of 13 mm, the field of view camera has a total angle of view of preferably 112 degrees or more and a pixel number of preferably 750 or more in the horizontal direction. The field of view imaging unit of the commercially available line of sight detection device 100 outputs according to the video graphics array (VGA) system, which is unsatisfactory for achieving the design intended by the present invention.

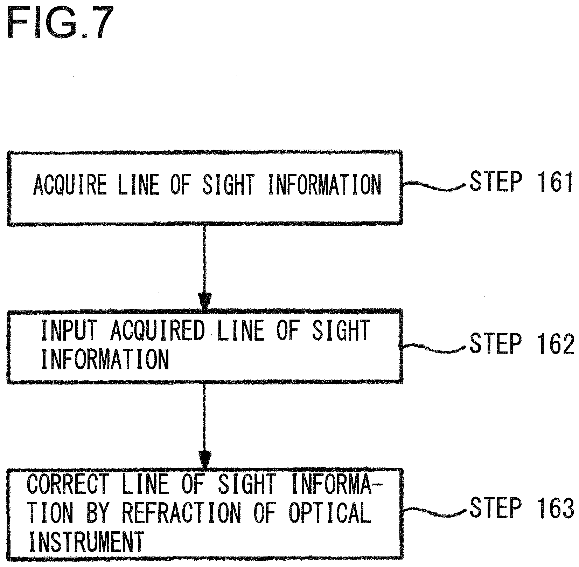

FIG. 7 is a schematic flowchart illustrating the procedure of the operation. As illustrated in FIG. 7, first, the line of sight detection device 100 acquires line of sight information (step 161). Upon acquisition of the line of sight information, the line of sight information of the subject who wears an optical instrument that refracts light into the eyeball of subject (for instance, spectacle lens L). This line of sight information includes errors of the direction of line of sight and rotation of the eyeball due to the refraction of light by the optical instrument.

After the acquisition of the line of sight information, the line of sight detection device 100 inputs the line of sight information into the line of sight information correction device 200 (step 162). The line of sight information correction device 200 corrects the line of sight information input to it using optical information of the optical instrument the subject wears (step 163). The optical information relates to the refraction of light at the optical instrument.

For instance, the optical information of a unifocal spherical lens may include the radius of curvature of the front surface of the lens, the radius of curvature of the rear surface of the lens, the thickness of the lens, and the refractive power of the lens. To make clearer the relative distance between the lens and the point of rotation, which is a center of rotation, the optical information may also include, for instance, a forward tilt angle, the apex of cornea distance (i.e., the distance between the center of the lens and the apex of cornea), and the cornea-point of rotation distance (i.e., the distance between the apex of cornea and the point of rotation). Instead of storing the radius of curvature of the rear surface of the lens, the optical information may include prescription powers of the lens, which enables one to derive the radius of curvature of the rear surface of the lens upon executing a program for performing the correction.

The optical information, for instance, for a unifocal astigmatic lens may include the radius of curvature of the surface of the lens, the base curvature of radius of the rear surface of the lens, the cross-radius of curvature (i.e., a radius of curvature in a crossing direction) of the rear surface of the lens, the thickness of the lens, and the refractive power of the lens. To make clearer the relative distance between the lens and the center of rotation, which is the center of rotation, the optical information may also include, for instance, a forward tilt angle, the apex of cornea distance (i.e., the distance between the center of the lens and the apex of cornea), and the cornea-point of rotation distance (i.e., the distance between the apex of cornea and the point of rotation). Instead of storing the base radius of curvature and cross-radius of curvature of the rear surface of the lens, the optical information may include prescription powers S and C of the lens, which enable deriving the base radius curvature and cross-radius curvature of the rear surface of the lens upon executing the program for performing the correction.

The optical information, for instance, for a progressive power lens may include parameters that allow reproduction of the shape of the front and rear surfaces, the thickness of the lens, and the refractive power of the lens. To make clearer the relative distance between the lens and the center of rotation, which is the point of rotation, the optical information may also include, the for instance, the forward tilt angle, the apex of cornea-center of rotation distance (i.e., the distance between the center of the lens and the apex of cornea), and the cornea-point of rotation distance (i.e., the distance between the apex of cornea and the point of rotation). The parameters that allow reproduction of the shape of surface of the progressive power lens includes sag amounts along the optical axis that can be measured with a three-dimensional measurement instrument. In case the sag amount can be divided into several components, such parameters may include the base radius of curvature and cross-radius of curvature of the surface shape of a mother sphere, and residual sag amounts. Any surface shape that includes a different expression, such as an aspherical surface or a polynomial expression, the optical information may include those parameters necessary for defining the expression.

For any surface other than a spherical surface or a toric surface, the optical information may become voluminous. In particular, the optical information relating to the progressive power lens tends to include a large amount of data. To reduce the storage area, several methods may be conceived. For example, a method may be used in which the prescription range is divided into several refined groups and (a part of or the whole) base data of lens shape that is specific to a particular one of the refined groups is used in common for each member of that particular refined group. Such a method of reduction in the storage area is useful to eliminate inconveniences in practice that the optical information relating to a single series of lenses is stored in two or more memory chips.

If the surface shape of a lens is expressed in terms of sag meshes in the case of, for instance, a progressive power lens, laying importance to reproducibility of the surface shape results in a decreased mesh interval between the sag meshes, an increased volume of data, and a prolonged calculation time for detecting the line of sight. To apply the error correction to stored data, i.e., data that is acquired from the line of sight detection device 100 and stored or applied real time to the data acquired from the line of sight detection device 100, shortening of the calculation time may in many cases be necessary. For this purpose, the surface shape is reproduced according to the basic shape data for a part at which the surface shape is characteristic, for instance, a range of 10 mm centered by the meridian for a progressive power lens and the other portion is reproduced as a unifocal lens. In the simplest way, the method of reduction in calculation such as coarsening of sag meshes is useful.

Such optical information may be stored in, for instance, the memory unit MR of the line of sight information correction device 200 or may be input from the external into the line of sight information correction device 200 via the connection terminal CT, the communication unit CM, or the slot SL. This allows the processing unit PR to use the optical information stored in the memory unit MR or the optical information obtained from the external via the connection terminal CT, the communication unit CM, or the slot SL.

For instance, to enable any optical material of the spectacle lens L to be used in a different lens series, the line of sight information correction device 200 may include a recording medium such as a memory card, which is prepared for each lens series, and store data such as surface shape basic data for each lens series applicable to all the prescriptions within one and the same lens series.

This allows easy accommodation to emergence of new lens series by preparing a new recording medium that stores the optical information of the new lens series. If data of all the lens series can be stored in one storage region, it is only necessary to update the data for every emergence of a new lens series.

Next, the operation of correcting the line of sight information is explained in detail below. First, the processing unit PR obtains a light beam that passes the center of rotation and also the position of the gaze point of a lens based on the position of gaze point, lens shape, and center of rotation of the lens. The relations of relative positions of the position of gaze point, lens, and center of rotation upon arranging them need be varied depending on the forward tilt angle, warp angle, and apex of cornea distance (i.e., the distance between the center of the lens and the apex of cornea), the cornea-point of rotation distance (i.e., the distance between the apex of cornea and the point of rotation). More precise results can be obtained by designating several objects in the field of view as references, measuring distances of the designated objects from a predetermined reference point in advance and using the distances in the calculation, for instance, in the correction of the position of gaze point.

If the relative position of the lens of the subject differs from a default value obtained from the surface shape basic data, use of the actually measured value in the determination of the relative position gives results with an increased precision. The light beam that passes the center of rotation and also the position of the gaze point of the lens is typically obtained using an approximation method such as a successive approximation method or Newton's method. However, other methods may also be used.

As a result, the light beam that passes the center of rotation and also the position of the gaze point of the lens is obtained. Based on this light beam, a first line of sight direction vector of the light beam that enters the optical instrument from the center of rotation (OC → R2) and an incident point R2 and also a second line of sight direction vector of the light beam that is output from the optical instrument to the gaze point (R1 → GP) and output point coordinates R1 are obtained. The first line of sight direction vector (OC → R2) is adopted as a corrected line of sight direction and a value obtained by converting the first line of sight direction vector into angle is adopted as a corrected angle of rotation of the eyeball. Atypical reference used upon the conversion into angle is the optical axis. However, a natural line of sight direction may be used as a reference. If a line of sight direction toward the gaze point is needed, the second line of sight direction vector (R1 → GP) may be calculated and adopted as such. If the incident coordinates into the optical instrument are needed, R2 may be adopted as such and if the output coordinates from the optical instrument are needed, R1 may be adopted.

If results of ray trace performed in advance are stored and the stored results are used upon measurement of line of sights, the processing unit PR searches for data relating to the optical instrument the subject wears from the optical information stored in the memory unit MR or from the optical information obtained from the external via the connection terminal CT, communication unit CM, or slot SL. Subsequently, the processing unit PR searches for data relating to the light beam that passes near the gaze point obtained from the line of sight detection device 100. Then, the processing unit PR executes interpolation of the data groups relating to the light beam that passes near the gaze point to obtain particular light beams that pass the gaze point and also the center of rotation and obtain corrected line of sight information based on the particular light beams.

The pitch of light beams needs to be set appropriately depending on the light beam passage range of the optical instrument and the precision of correction needed. For instance, the light beam may be passed at a pitch of 5 mm at the rear surface of the optical instrument. If priority is given to a decrease in time of calculation, the pitch may be set at a value greater than 5 mm. If priority is given to an increased precision, the pitch may be set at a value equal to or smaller than 5 mm. For a progressive power lens, the pitch is set to 3 mm or less, preferably around 1 mm.

The input light beam information includes a direction vector from the center of rotation toward the optical instrument whereas the input intersection point information includes the coordinates of the intersection point of the light beam from the center of rotation toward the optical instrument with the optical instrument. The output light beam information includes a direction vector from the optical instrument toward the gaze point whereas the output intersection point information includes the coordinates of the intersection point of the light beam from the optical instrument toward the gaze point with the optical instrument.

Next, the processing unit PR performs light beam search and interpolation. Based on the output light beam information and the output intersection point information, the processing unit PR reproduces output light beams and selects two light beams near the gaze point from the output light beams. Then, it selects input light beams corresponding to the two selected output light beams and interpolates the two selected output light beams and the corresponding input light beams to generate a light beam that passes the center of rotation and the gaze point. The generated light beam is an interpolated light beam; it does not always pass through the gaze point but may pass a point very close to the gaze point. This interpolated light beam may be adopted as the light beam that passes the gaze point.

Upon obtaining the interpolated light beam, interpolation of the intersection point with the optical instrument may be performed in addition to the interpolation of the input light beam information and the output light beam information. This enables one to obtain the intersection points of the interpolated light beam. In addition, based on the interpolated light beam information, the line of sight direction and angle of rotation can be obtained.

If the relative positions among the subject, the eyeglasses, and the line of sight detection device 100 is unchanged, for instance, because the head of the subject is fixed or the subject sits on the chair, the method mentioned above sufficiently corrects errors. However, if the subject is in a physically unstable condition; for instance, he moves his face in a big motion or in a swift motion, or exercises or he is on a running car, the relative positions among the subject, the eyeglasses and the line of sight information detection unit will change during the measurement. Experiments conducted by the inventors of the present application indicated that this change causes a big error. Thus, preferably, the line of sight detection device 100 includes a relative position detection means that detects relative positions of at least two, preferably all, of the subject, the eyeglasses and the line of sight information detection unit and a relative position correction means that corrects any differences in the relative positions.

The relative position detection means may be achieved by setting, for instance, an eyeball imaging camera to detect at least one or both, if possible, of the feature points of the subject and of the eyeglasses the subject wears and continue following them during their measurement. The relative position detection means is not limited to this and can be achieved, for instance, by setting a dedicated camera for detecting the relative positions or by incorporating a mechanism that magnetically detects the relative positions.

The relative position correction means calculates relative positions based on one or both of the feature points of the subject and the eyeglasses detected by the relative position detection means and corrects them. This enables elimination of errors if the relative positional relationship among the subject, the eyeglasses and the line of sight detection unit differs from what has been expected. Thus, this enables design of lenses that are more satisfactory to the customers than conventionally.

The above mentioned processing allows giving corrected line of sight direction, corrected angle of rotation of eyeball, and corrected intersection points of the optical instrument and the corrected line of sight. This enables one to obtain line of sight information having a smaller error than conventionally, which in turn enables one to obtain intersection points of the line of sight and the lens having a smaller error than conventionally. As a result, design and provide lenses that are more adapted to the line of sight of the wearer than conventionally can be provided. That is, the above mentioned processing enables one to achieve a line of sight-related device and a line of sight information correction method that correct eyeball information such as image of eyeball, image of pupil, and angle of rotation of eyeball, and line of sight information such as gaze point, lens input line of sight direction, lens output line of sight direction, and lens intersection points using the refractive index or refractive power based on the refractive index, of a refracting object, such as a lens, placed between the eyeball and the gaze point and having a refractive index other than 1. Simply stated, the eyeball information and the line of sight information can be corrected using the refractive index or refractive power of a refractive object placed between the eyeball and the gaze point.

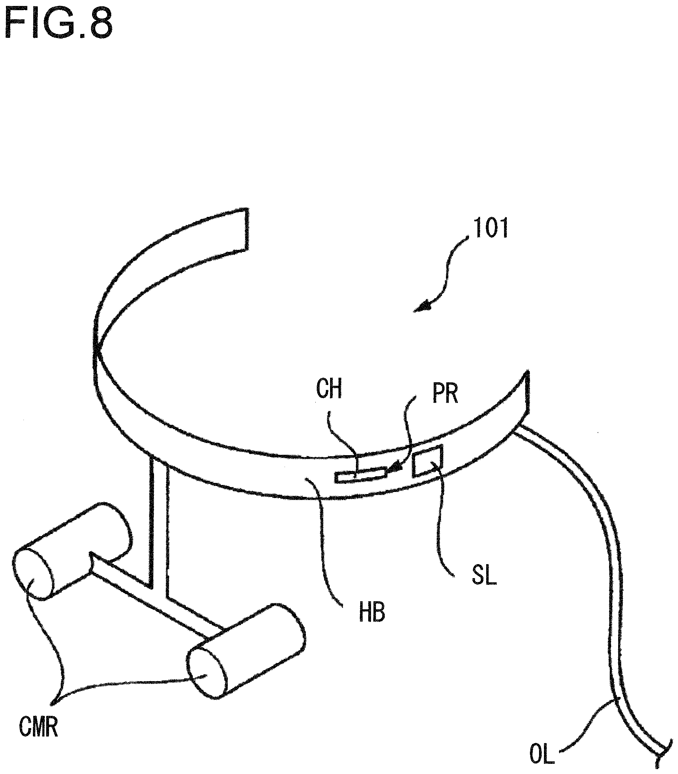

The present example may be configured to include the processing unit PR and the slot SL that are fixed to the headband HB. The processing unit PR may be a chip CH that has a line of sight error correcting function as shown in FIG. 8. The slot SL allows for insertion of a recording medium such as an optical medium or a magnetic medium. The slot SL is configured to read in data such as optical information stored in the recording medium.

This configuration eliminates output of the line of sight information obtained by imaging with the eyeball imaging camera CMR and load of the data to the line of sight error correction function, which is intermediate data. That is, it allows the line of sight information whose errors have been corrected to be taken out directly. This eliminates subjecting the result output from the line of sight detection device 101 to the conversion operation called error correction to speed up the working. In addition, elimination of the intermediate data saves the capacity of the storage device such as a hard disk.

The processing speed increases and error-corrected data is obtained in real time. For any field of view camera separately provided, this enables the video image captured by the field of view camera and the error-corrected line of sight information to be displayed in combination. This allows data acquisition while confirming the response by the subject, which has been difficult to achieve by performing the acquisition of the line of sight information and the error correction in separate steps. This also allows downsizing of the device.

After the correction of the errors of the line of sight, the results of correction may be evaluated, for instance, using a line of sight tracking result evaluation device. In evaluating the result of correction, for instance, the line of sight tracking result evaluation device first obtains an intersection point of the spectacle lens and the line of sight by using corrected angle of rotation of eyeball that is the result of correction of the error of line of sight and displays the obtained result on a display device. The obtained result is displayed on the display device so as to correspond to the figures of the eyeglasses frame and the spectacle lens.

By confirming the positional relationship between the eyeglasses frame and the corrected intersection point shown on the display device, it can be determined whether the eyeglasses frame is within the range of the movement of the line of sight of the actual wearer. The corrected intersection point differs from the non-corrected intersection point by 5 mm as the case may be as described above. This expands the difference between the frames the wearer can wear and those unavailable to the wearer considerably, with the frames prepared based on the corrected intersection being more properly fitting to the user than those prepared based on the non-corrected intersection point. Thus, use of the corrected intersection point provides advantages to the client.

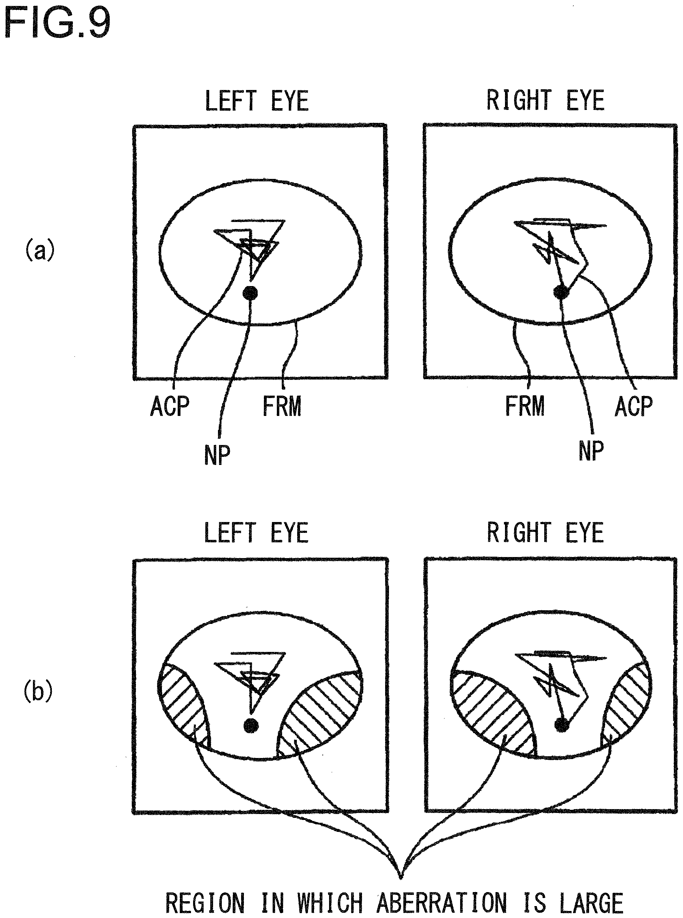

For instance, FIG. 9(a) and (b) show pictures of eyeglasses frames and spectacle lenses and corrected intersection points. On the pictures of the eyeglasses frames, reference points for reading NP are depicted together with eyeglasses frames FRM and corrected intersection points ACP (or amended cross point). The reference point for reading indicated on the picture of the eyeglasses frames facilitates one to know as to whether the eyeball can be turned up to the reference point for reading when the wearer of the lens has a regular life.

For instance, in the case shown in FIG. 9(a), the evaluation result of the right eye indicates that the corrected intersection point ACP reaches the reference points for reading NP whereas the evaluation result of the left eye indicates the corrected intersection points ACP fails to reach the reference points for reading NP. This indicates that the left eye of the wearer does not turn up to the position of the reference point for reading in his ordinary life and thus the lens is unsuited for the wearer.

For instance, in the case shown in FIG. 9(b), indication of a range in which aberrations are large on the picture of the spectacle lens facilitates determination as to whether the habit of the wearer in movement of the line of sight matches with the range in which the aberrations of the lens are small. For instance, in the case shown in FIG. 9(b), the corrected intersection point will not pass through the region in which the aberrations are large, indicating that the subject wears a lens with fitted aberrations.

Upon evaluation of the results of correction, the line of sight tracking result evaluation device displays, for any field of view camera provided separately, an output vector in the direction of line of sight based on the video image captured by the field of view camera and the corrected spectacle lens to clearly distinguish which point and at what angle the wearer looks at. This enables one to seek a cause of having trouble in seeing.

In this manner, evaluation of the results of correction of the errors in line of sight using the line of sight tracking result evaluation device allows precise evaluation of the errors in line of sight to facilitate evaluation of the frame and spectacle lenses as to whether they are suited for the wearer. Such evaluation also allows identification of the cause of discomfort thus far unclear and elimination of it to improve comfort. This enables achievement of an evaluation value calculation device and an evaluation value calculation method that calculate evaluation values using correction information obtained by performing correction of eyeball information such as image of eyeball, image of pupil, and angle of rotation of eyeball, and line of sight information such as gaze point, direction of line of sight input into lens, direction of line of sight output from lens, and lens intersection points using the refractive index or refractive power based on the refractive index, of a refracting object, such as a lens, placed between the eyeball and the gaze point and having a refractive index other than 1. Use of these evaluation values allows a method of designing a lens selection method described below to be achieved and also a lens designed using the evaluation values to be achieved and a display method that displays evaluation values to be achieved.

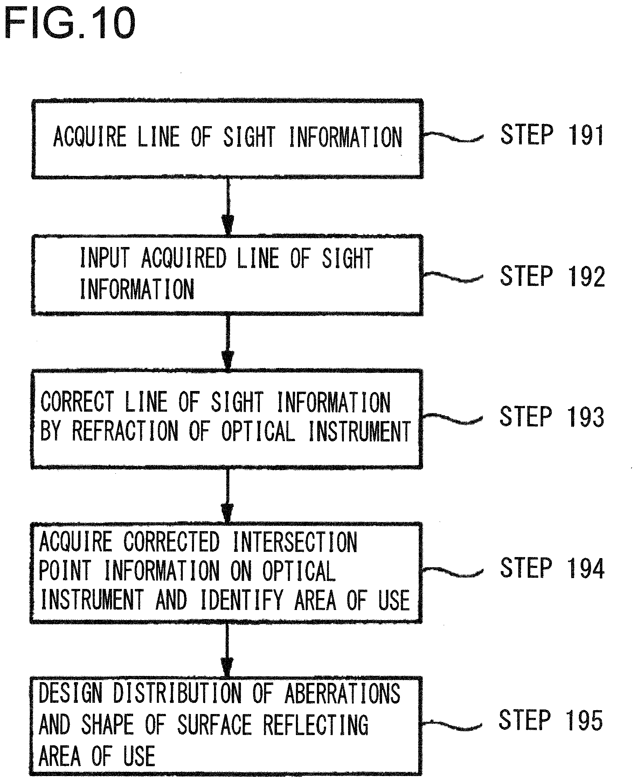

Next, the method of designing a spectacle lens according to this example is explained. FIG. 10 is a flowchart illustrating the method of designing a spectacle lens according to this example. As shown in FIG. 10, this example designs a lens for each wearer individually. First, the line of sight detection device 100 and the line of sight information correction device 200 are provided. Subsequently, the line of sight detection device 100 provided is attached to a subject who wears an optical instrument such as spectacle lenses. Then, the line of sight of the wearer is measured as described above (step 191), the acquired line of sight information is input (step 192), and any error contained in the input line of sight information is corrected (step 193).

Subsequently, the center of rotation of eyeball, and the intersection point of the optical instrument and the line of sight are obtained by using the corrected line of sight information. This provides a region in which the line of sight of the subject moves on the lens. This region is an area of use at the spectacle lens (step 194).

Subsequently, distribution of aberration and the shape of surface are determined to make the aberration of the area of use smaller (step 195). To reduce or eliminate the aberrations over the entire region s of the lens is impossible. This directs one to decrease the aberration of the area of use preferentially. For instance, the lens may be designed so that it has astigmatism of 1.0 Dpt or less at the line of sight region on the lens of the subject. The lens may be designed to further reduce or eliminate the aberrations; for instance, the region in which the intersection points distribute at high density or stay for a long time may have astigmatism of 0.5 Dpt or less. To cope with the a difference in astigmatism between the allowance for the region for distance and that of the region for reading, the region for distance may be set to have an astigmatism of 0.5 Dpt or less whereas the region for reading may be set to have an astigmatism of 1.0 Dpt or less. For any other aberration other than the astigmatism, such as average spherical dioptric power or distortion, such a high density or long stay region may be preferentially adjusted to have a decreased aberration. Use of the so-corrected line of sight information enables one to design a lens of which the line of sight of the wearer at the lens in an actual use condition matches with the distribution of aberrations at the lens, thus providing a comfortable sight to the wearer.

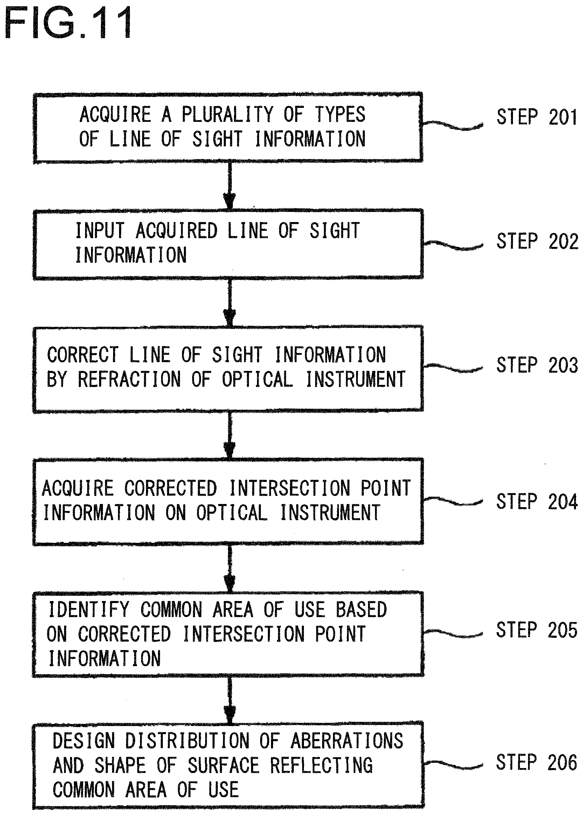

The above explanation relates to the example of the method of designing a lens for a single person. However, to design lenses for a plurality of persons is also possible. FIG. 11 is a flowchart illustrating designing spectacle lenses for a plurality of persons. Designing spectacle lenses for the persons has a merit that collecting a large amount of information, for instance, corrected line of sight information enables manufacture of lens products that reflect the movements common to human eyes. On one hand, the present invention provides lenses dedicated to an individual when it is applied to him. On the other hand, lenses that reflect the movements of eyes common to human can be manufactured as products that provide comfortable eyesight to many people. This enables spectacle lenses to be provided at a low price.

The operation of collecting corrected line of sight information from a plurality of persons can be achieved by repeating an operation equivalent to the operation of collecting corrected line of sight information from a single person (step 201 to step 203). Use of a plurality of pieces of corrected line of sight information thus obtained enables one to obtain a plurality of corrected angles of rotation of eyeball and a plurality of intersection points of the optical instrument and the line of sight (step 204).

Statistical processing of the intersection points thus obtained provides a region through which the line of sights of many people pass (step 205). Preferably, the statistical processing is performed reflecting the magnitude of the density of intersection points and the length of the stay time of the intersection points. Subsequently, the distribution of aberrations and the shape of surface are determined (step 206). Since it is impossible to reduce or eliminate the aberrations over all the regions of the lens, the aberrations of the area of use are preferentially decreased. Use of so-corrected line of sight information enables design of a lens of which the distribution of aberrations matches with the distribution of aberrations in a region that many people use. Mass production of the lens so-designed enables the manufacturer to provide lenses that give comfortable sight to many people at a low price.

Next, the method of manufacturing the spectacle lenses designed as described above is explained. Data for processing are acquired from the lenses designed by the above-mentioned method at a processing pitch required by a processing machine. The processing pitch is selected optimally depending on the processing machine used and processing tool used.

The design data is input into a computer, which outputs processing data at a pitch designated by dedicated software. The output processing data is transmitted to the processing machine to manufacture lenses. The lens manufactured by this method allows a design that matches with the distribution of aberrations to the line of sight of the wearer at the lens in an actually worn condition, thus providing a lens capable of giving a comfortable sight to the wearer.

The above explains the example in which the data of the shape of the lens obtained based on the line of sight information is measured and subsequently corrected is transmitted directly to the manufacturing device. However, the present invention is not limited to this. For instance, any desired timing may be adopted for transmission and processing of data. The places of data acquisition, correction of the line of sight information, preparation of processing data, and installation of the processing machine need not be the same but they may be separated arranged. Use of communication of various pieces of data via communication means allows works at respective places.

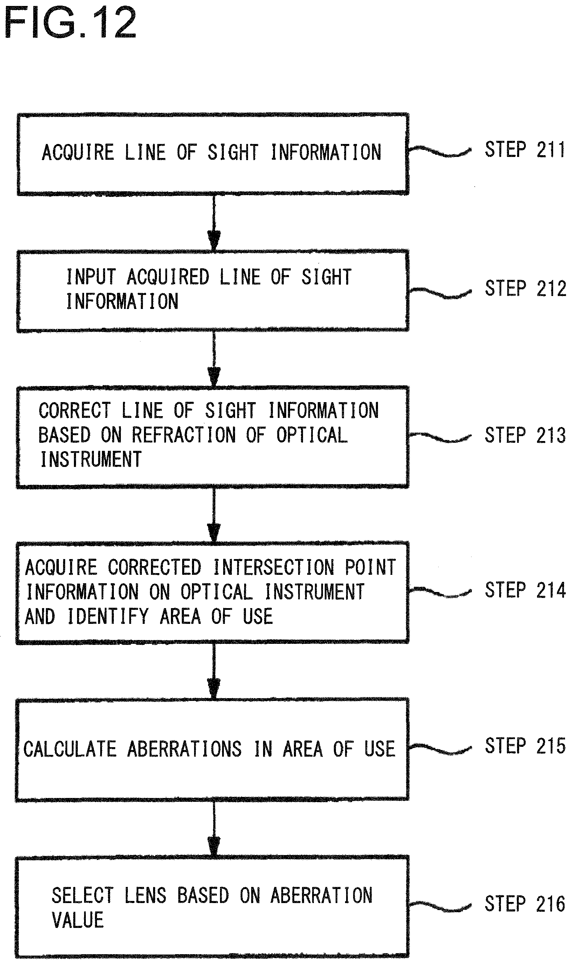

Next, the method of selecting spectacle lenses using the line of sight detection device 100 and the line of sight information correction device 200 is explained. FIG. 12 is a flowchart illustrating the lens selection method according to this example.

In this method, first, the line of sight information of the subject is acquired using the line of sight detection device 100 and the line of sight information correction device 200 in the same procedure as described above, and the acquired line of sight information is corrected (steps 211 to 213). This provides a corrected angle of rotation of eyeball and a corrected intersection point of the optical instrument and the line of sight.

Next, the processing unit PR obtains a region on the lens in which the line of sight of the subject moves (i.e., area of use) (step 214). To this end, a plurality of types of lenses to be prescribed for the subject are prepared and aberrations of the area of use of the subject is acquired for each of these lenses. The processing unit PR selects a spectacle lens suited for the subject using the acquired aberrations of the area of use. For instance, a lens with the smallest aberration in the area of use of the subject may be selected as the most suitable one for the subject. Alternatively, priorities may be set to lenses based on the aberrations of are of use of the subject. In the latter case, for instance, the subject makes a final decision based on the set priorities.

What is important is that the selection of lenses is based on the corrected line of sight information. A lens that has performance matching with the line of sight region of the subject can be selected to provide a comfortable sight to the wearer only after the correction of the line of sight information is made.

Next, the spectacle lens according to this example is explained. The spectacle lens according to this lens has a feature point that is defined using the corrected line of sight. The feature point is a point that characterizes aberration of a lens, for instance, reference point for reading or a region having a certain value of astigmatism factor. The performance of the region for reading is determined by the procedure as indicated below.

Upon determination of the region for reading, the wearer puts a target object to be gazed at in a position in which a usual operation for reading is conducted, for instance, by holding a book in his hand, to identify the gaze point upon operation for reading, i.e., the gaze point for reading. Subsequently, a corrected line of sight of the subject when he gazes at the gaze point for reading is acquired using the line of sight detection device 100 and the line of sight information correction device 200 or the line of sight information detection device 101 which includes both the devices integrated to each other.

Arranging a reference point upon gazing for reading at the intersection point of the corrected line of sight with the lens provides a lens that matches with the actual line of sight of the subject. That is, the reference point upon gazing for reading is arranged at the intersection point of the corrected line of sight with the lens.

The term "reference point upon gazing for reading" means a point at the intersection of the corrected light beam upon gazing for reading with the lens, which point is a reference point set on the lens.

For instance, if the wearer sees a stable image in a stable manner, i.e., in a condition the lens has a low power variation and a low astigmatism factor at the reference point upon gazing for reading, a reference point for reading may be set near the reference point upon gazing for reading. If a power that allows visual contact with the gaze point at the reference point upon gazing for reading is sufficient, the upper edge of a reference circle for reading may be set at the reference point upon gazing for reading.

If a correspondence of the line of sight upon operation for reading to any point on the lens selected from the group consisting of the reference point for reading, the upper edge of the reference circle for reading, and a halfway point of these is defined for each manufacturer or glasses shop, such a defined point may be set as the reference point upon gazing for reading.

For determining the reference point for reading, the conventional line of sight detection device 100 sets the reference point upon gazing for reading at D2 allocated by the line of sight OC→D2 as shown in FIG. 5. In contrast, the line of sight detection device according to this invention allows the reference point upon gazing for reading to be set at R2 allocated by the line of sight OC→R2.

Let us assume NRP designates a reference point upon gazing for reading, D1 (front surface) and D2 (rear surface) designate intersection points of a straight line connecting a gaze point for reading with a point of rotation (or center of pupil) with a lens, R1 and R2 designate intersection points (front surface) of the line of sight corrected according to this invention with the front surface and rear surface of a lens, and i designates the lens surface at which a reference point for reading or a reference circle for reading is set (with i=1 indicating the front surface, and i=2 indicating the rear surface). Then, we obtain:

$$y(\mathrm{NRP}) \neq y(\mathrm{Di}).$$

Preferably, for any transmissive spherical dioptric power at the reference point upon gazing for reading of greater than 0 (zero), we obtain:

$$|y(\mathrm{NRP})| < |y(\mathrm{Di})|.$$

For the transmissive spherical dioptric power at the reference point upon gazing for reading is smaller than 0 (zero), we obtain:

$$|y(NRP)| > |y(Di)|.$$

The procedure of achieving the transmissive power the subject desires is indicated below. First, the subject is requested to feel a first condition in which he sees clearly, a second condition in which he sees indistinctly as compared with the first condition, and a third condition in which he sees considerably indistinctly compared with the first condition. Specifically, for the first condition, he wears a unifocal lens that matches with his prescribed dioptric power (referred to as "prescribed unifocal lens). For the second condition, he wears an astigmatic lens having a dioptric power more or less deviated from that of the prescribed unifocal lens (for instance, 0.25 Dpt or 0.5 Dpt). For the third condition, he wears a stigmatic lens with a dioptric power considerably deviated from that of the prescribed unifocal lens (for instance, 0.75 Dpt or 1.00 Dpt).

Subsequently, the subject is requested to designate which range he would like to see in each of the first to third conditions. For instance, he is requested to stand in a room, the wall of which has a grid or patter affixed on it, and designate to which range he would like to see in each of the first to third conditions.

For each of the first to third conditions, he is requested to designate several marginal points in the grid or pattern to indicate the range he would like to see. Use of more designated points is preferred since this allows a more complicated region to be indicated, which reflects more precisely his desired region.

Upon designation of the points by the subject, the corrected line of sight at the time when he sees his designated points is acquired using the line of sight detection device 100 and the line of sight information correction device 200, or the line of sight information detection device 101, which includes these devices in combination. This operation finishes the matching of the desired field of view of the subject, the coordinates of the point on the lens, and the desired performance (in terms of allowable astigmatic value) at the position of the point. Specifically, at the coordinates on the lens obtained with the stigmatic lens of 0.5 Dpt, it is sufficient to achieve a transmissive astigmatism of 0.5 Dpt or less. In other words, if the desired performance is fulfilled at the coordinates on the lens obtained as described above, a lens that provides the field of view the subject desires can be provided.

The lens designed based on the corrected line of sight satisfy the following condition. Let us assume D1 (front surface) and D2 (rear surface) designate intersection points of a straight line connecting a point the subject designates with a point of rotation (or center of pupil) with a lens, R1 and R2 designate intersection points of the line of sight corrected according to this invention with the front and rear surfaces of the lens, respectively. Then, we obtain:
D1 ≠ R1, and D2 ≠ R2.

In the area for distance in which the dioptric power is almost constant, the following conditions are obtained. Let us assume LENGTH ( ) indicates a distance from the optical center of a lens. If the dioptric power of the area for distance is positive, we obtain:

LENGTH (D1) < LENGTH (R1), and
LENGTH (D2) < LENGTH (R2).
If the dioptric power of the area for distance is negative, we obtain:

LENGTH (D1) > LENGTH (R1), and
LENGTH (D2) > LENGTH (R2).

In the above example, the field of view of the subject who wears a lens having a deviated astigmatic power matches with the transmissive astigmatism distribution on the lens. However, the field of view of the subject who wears a lens having a deviated spherical dioptric power from the prescribed dioptric power may match with the transmissive spherical dioptric power on the lens. If the subject is aware of how blurring occurs, he does not have to wear a lens with a deviated dioptric power.

Next, a method of notifying visual ability according to this example is explained. The method of notifying visual ability presents the information acquired using the line of sight detection device 100 and the line of sight information correction device 200 and values calculated based on the acquired information to the subject. First, the line of sight detection device 100 and the line of sight information correction device 200, or the line of sight information detection device 101, which includes these devices in combination, is used to acquire a corrected line of sight of the subject.

Subsequently, an intersection point of the acquired line of sight with the lens is obtained to acquire intersection points on the lens. In addition, an intersection point of the corrected line of sight with the lens when the wearer sees the gaze point for reading is acquired. Then, based on the acquired intersection point and the fitting point on the lens, a corrected progressive zone length is acquired. The acquired corrected progressive zone length is notified or presented to the subject.

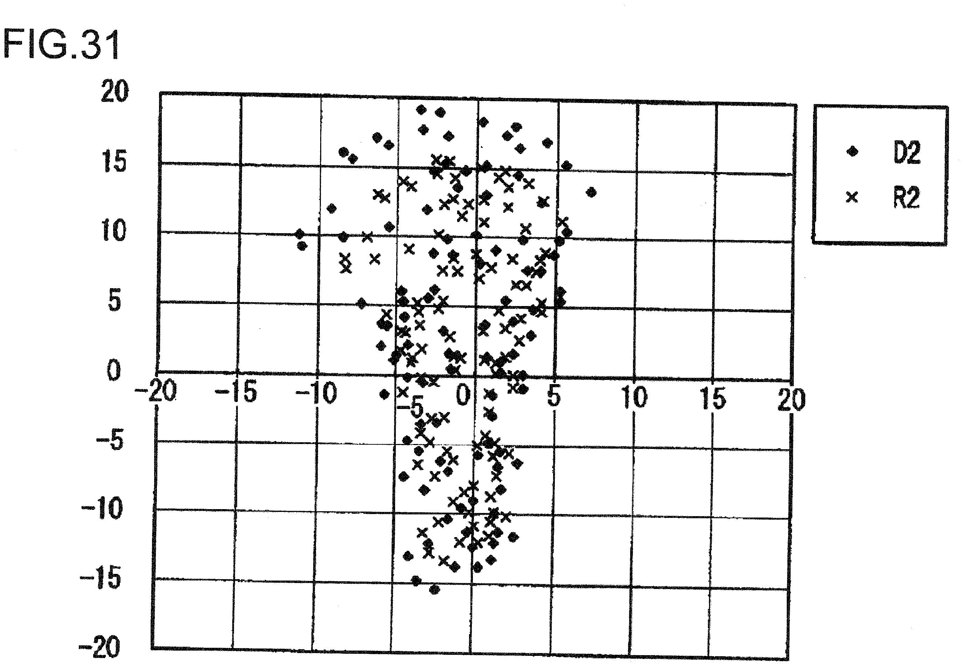

The method of presenting the acquired corrected progressive zone length includes, for instance, presentation on a monitor, presentation by printing on paper, presentation in a lens specification document and distribution of such. The intersection points according to the present invention may be presented not only alone but also together with the intersection points obtained by the conventional method as shown in FIG. 31. This enables the effects of the lens according to this invention to be transferred directly. Diagrammatic representation of the intersection point obtained by the method of this invention and the distribution of aberrations of the lens in superimposition is more effective for understanding. Description of the progressive zone length along with a diagram, for instance, FIG. 5, further facilitates understanding of the effects of the lens of this invention. Use of such a notification method, in particular use of both of the conventional notification method and the notification method according to this invention will be highly effective; for instance, such provides a satisfaction to the client that has been unavailable conventionally.

The above explained operations may be performed by a computer that executes a predetermined program.

For instance, a program may be used which causes the computer to execute an input step that inputs the line of sight information into a predetermined input unit and a calculation step that corrects the line of sight information input to the input unit.

The program may be used to cause the computer to execute a detection step that detects the line of sight information and a calculation step that corrects the detected line of sight information.

Also, the program may be used to cause the computer to execute a correction step of correcting the line of sight information and a design step of determining at least one of the distribution of aberrations and the shape of lens surface of the spectacle lens the subject wears based on the corrected line of sight information, positional information such as position of the gaze point, lens shape, or center of rotation, and the optical information.

The program may be used to cause the computer to execute a correction step of correcting the line of sight information using the optical information, a design stepof determining at least one of the distribution of aberrations and the shape of lens surface of the spectacle lens the subject wears based on the corrected line of sight information, the positional information, and the optical information, and a processing step that causes a predetermined processing device to process a spectacle lens in response to the result of the determination.

Further, the program may be used to cause the computer to execute a correction step of correcting the line of sight information using the optical information, and a selection step of selecting a spectacle lens the subject wears from a plurality of spectacle lenses having different distributions of aberrations and different shapes of the lens surface based on the corrected line of sight information, the positional information and optical information.

The program may be stored in a computer readable recording medium such as CD-ROM, DVD, or a flush memory. The program stored in the recording medium may be used to cause to computer to execute the operations mentioned above. The program may be provided to the computer in the form of data signals transmitted via the Internet.

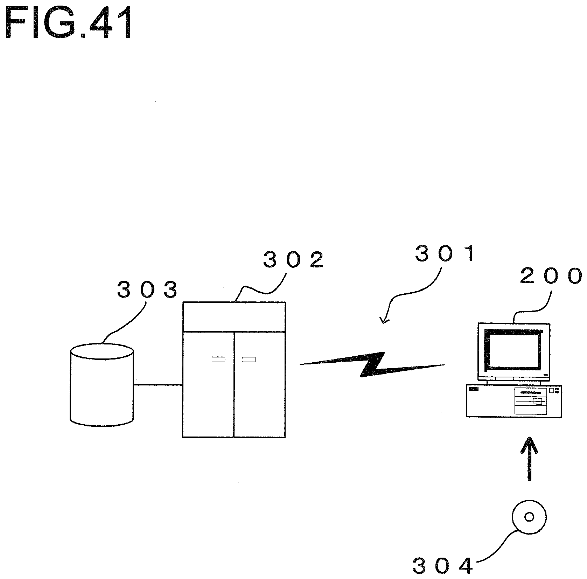

FIG. 41 is a diagram illustrating this aspect. The personal computer 200, which is a general-purpose personal computer serving as the line of sight information correction device 200, receives the program from the CD-ROM 304. The personal computer 200 has a function to connect with a communication line 301. A computer 302, which is a server computer that provides the program, stores the program in a recording medium such as a hard disc drive 303. The communication line 301 is a communication line, such as the Internet, or a dedicated communication line. The computer 302 reads out the program from the hard disk drive 303 and transmits the read out program to the personal computer 300 via the communication line. That is, the computer 302 causes the program to be carried as data signals on a carrier wave and transmits it via the communication line 311. In this manner, the program can be provided as a computer readable program product in various forms such as a recording medium or data signals.

Next practical examples according to this example are explained.

Practical Example 1:

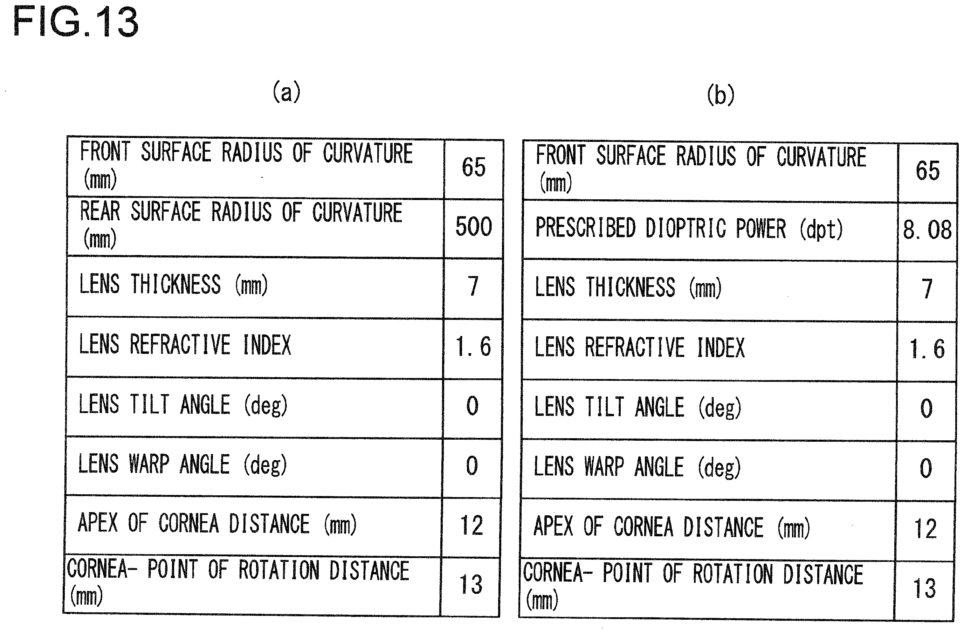

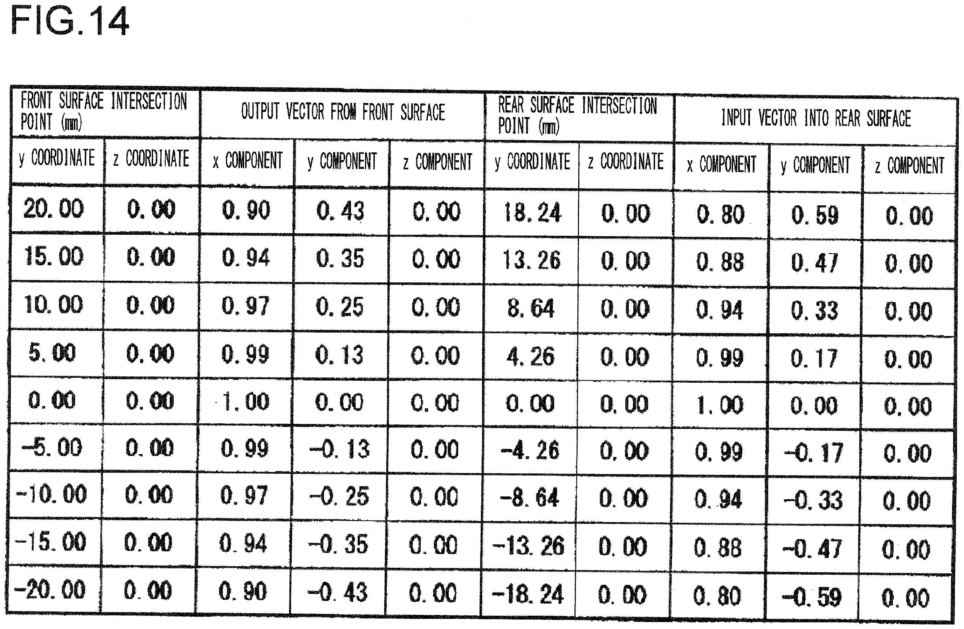

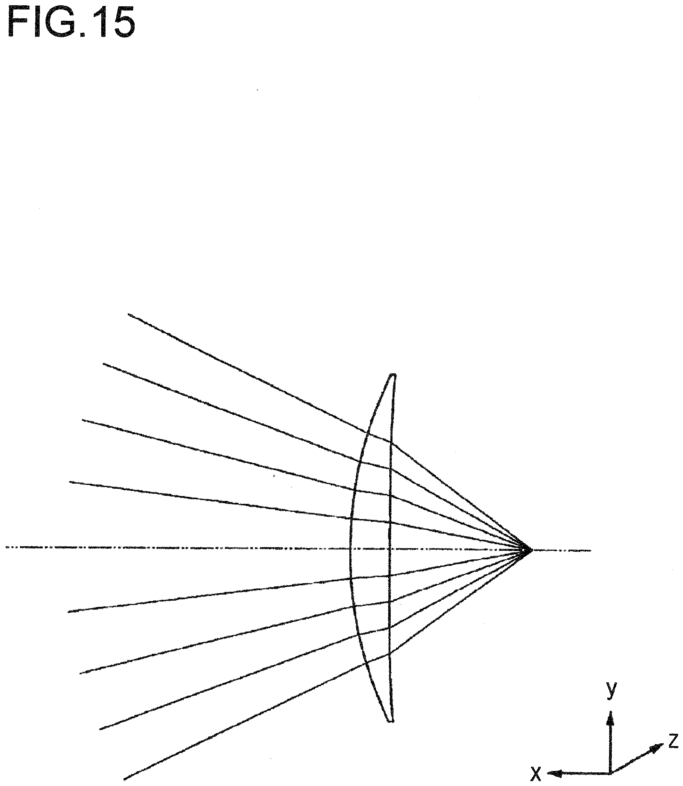

Practical Example 1 uses a unifocal spherical lens for the spectacle lens. FIG. 13 shows the content of lens shape basic data stored in, for instance, the memory unit MR. FIG. 14 shows the content stored in case the transmitted light beam information is stored. The transmitted light beam information is obtained by reproducing the lens and center of rotation using the lens shape basic data shown in FIG. 13 and creating a light beam that passes the center of rotation (FIG. 15). The spectacle lens having he lens shape basic data shown in FIG. 13 is a rotationally symmetric lens and thus it is sufficient to perform the above procedure along one axis.

FIG. 13 exemplifies a practical example in which data is obtained at a pitch of 5mm within the range of (y, z)=(20, 0) to (y, z)=(-20, 0), If needed, this range may be expanded or a smaller pitch than 5 mm may be used.

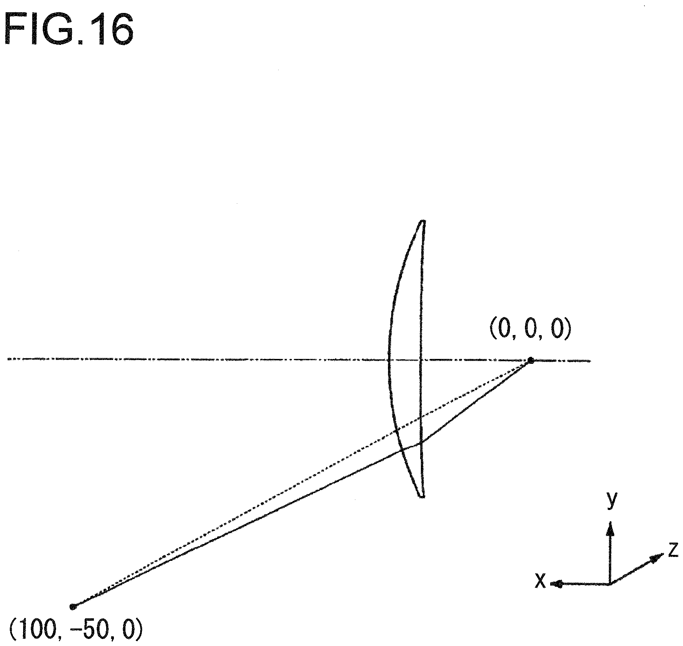

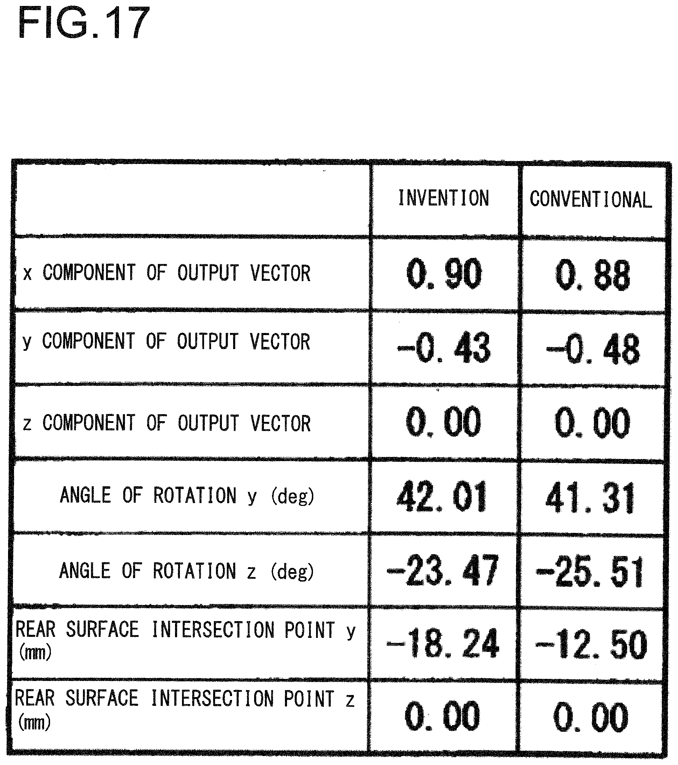

The gaze point obtained using the line of sight detection device 100, which is at the point of coordinates of (100, -50, 0) from the origin, which is the center of rotation, is corrected as follows. The light beam obtained that passes the point of rotation, is refracted by the lens and then passes the gaze point is as shown in FIG. 16. Based on this light beam, the values as shown in FIG. 17 are obtained. The values, which are obtained using the line of sight detection device 100, are also shown side by side. The differences between the corrected values obtained according to the invention and the values obtained using the line of sight detection device 100 are apparent, which indicates that the present invention has great effect.

Practical Example 2:

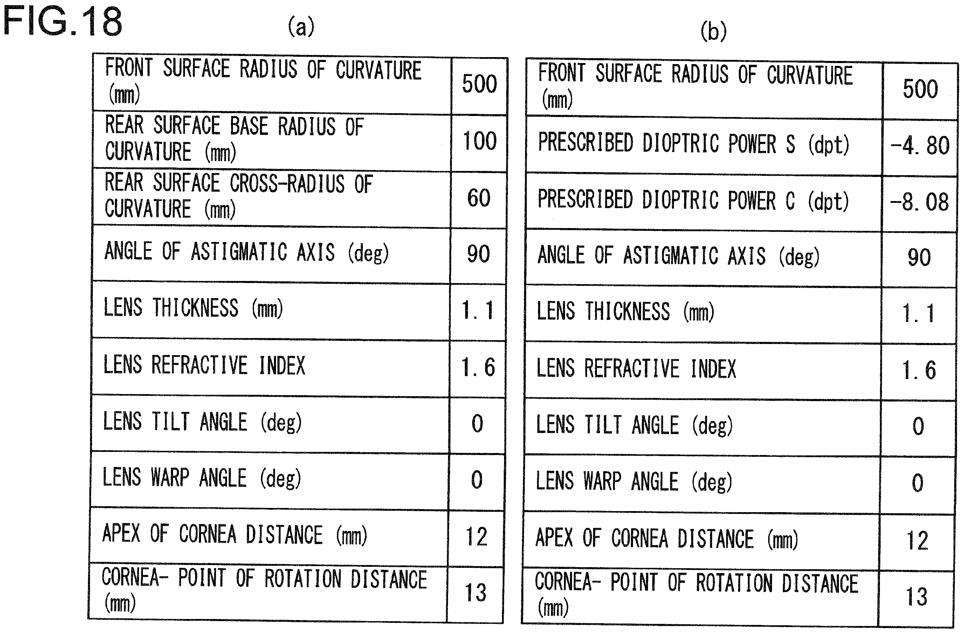

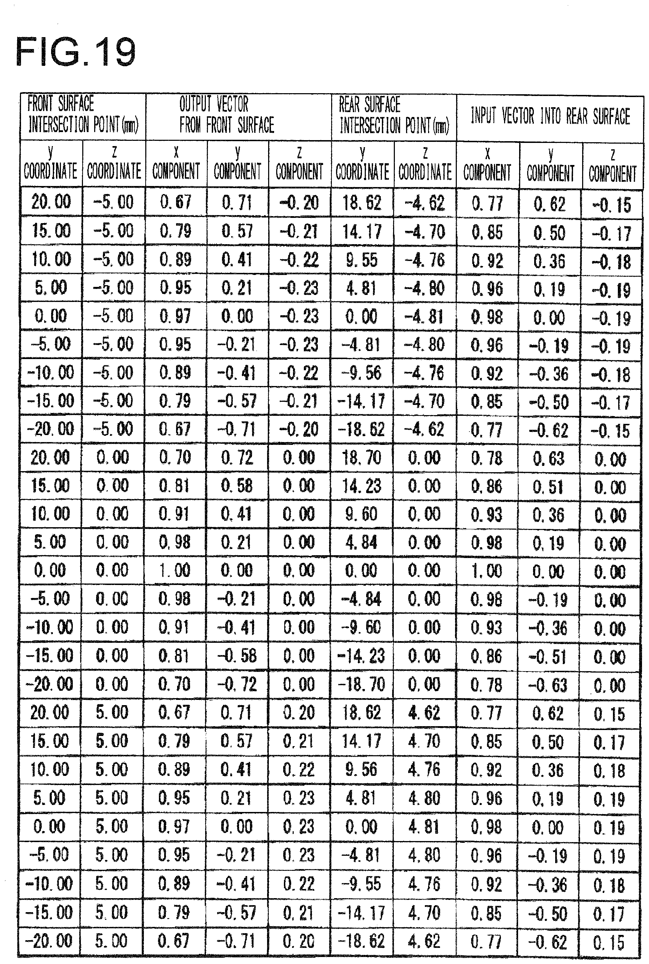

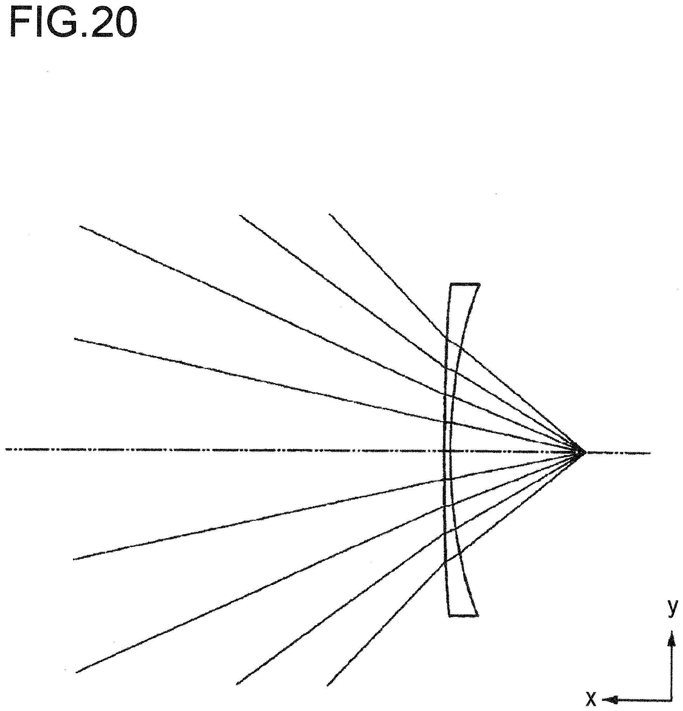

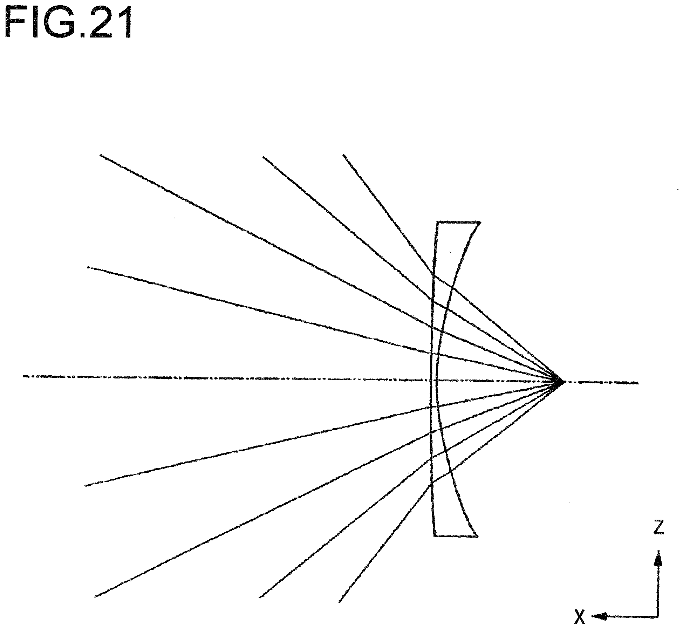

Practical Example 2 uses a unifocal astigmatic lens as the spectacle lens. FIG. 18 shows the content of lens shape basic data stored. FIG. 19 shows the content of the transmitted light beam information stored. The transmitted light beam information is obtained by reproducing the lens and center of rotation using the lens shape basic data shown in FIG. 18 and creating a light beam that passes the center of rotation (FIGS. 20 and 21).

FIG. 19 exemplifies a practical example in which data is obtained at a pitch of 5mm within the range of (y, z) = (20, -5) to (y, z) = (-20, -5). If needed, this range may be expanded or a smaller pitch than 5 mm may be used.

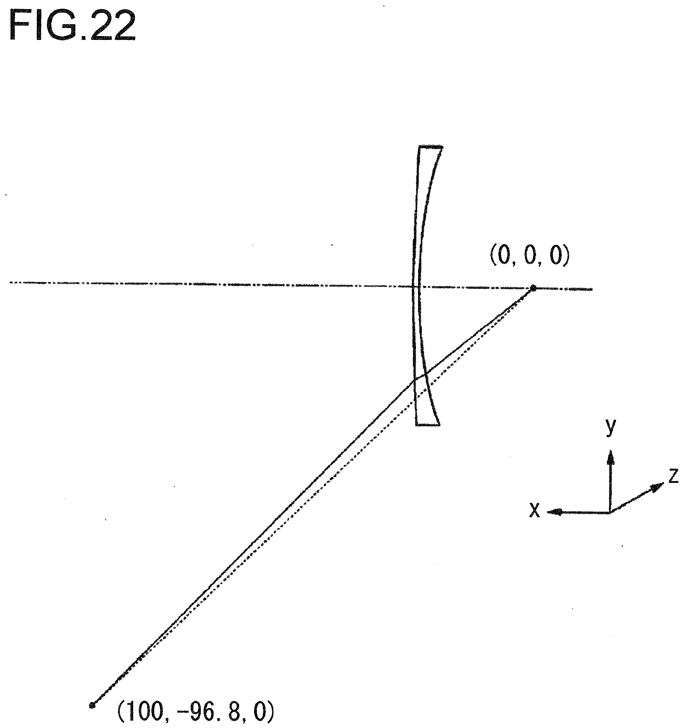

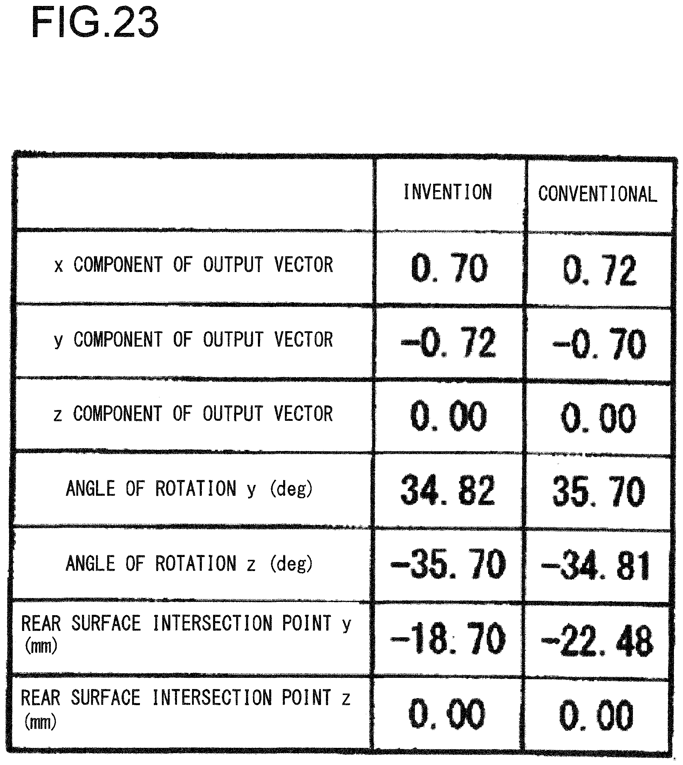

The gaze point obtained using the line of sight detection device 100, which is at coordinates of (100, -50, 0) from the origin, which is the point of rotation, is corrected as follows. The light beam obtained that passes the center of rotation, is refracted by the lens and then passes the gaze point is as shown in FIG. 22. Based on this light beam, the values as shown in FIG. 23 are obtained. The values, which are obtained using the line of sight detection device 100, are also shown side by side. The differences between the corrected values obtained according to the invention and the values obtained using the line of sight detection device 100 are apparent, which indicates that the present invention has great effect.

Practical Example 3:

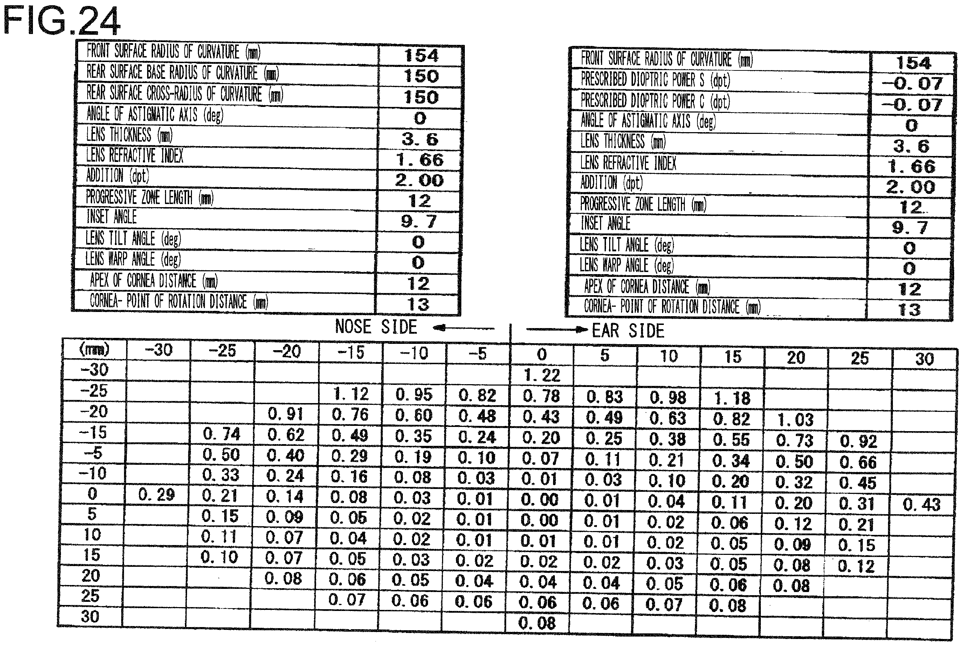

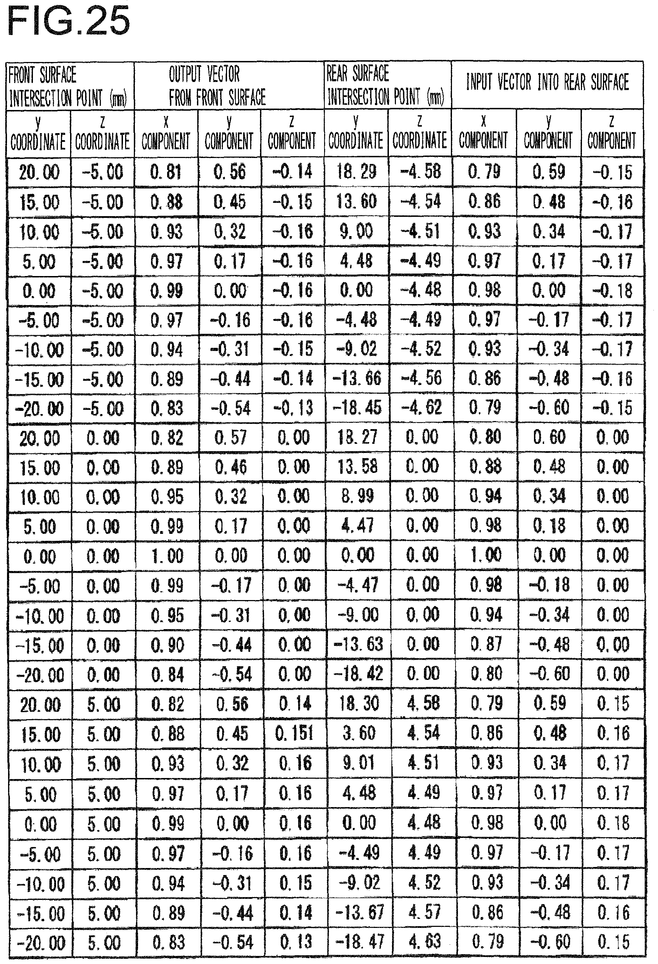

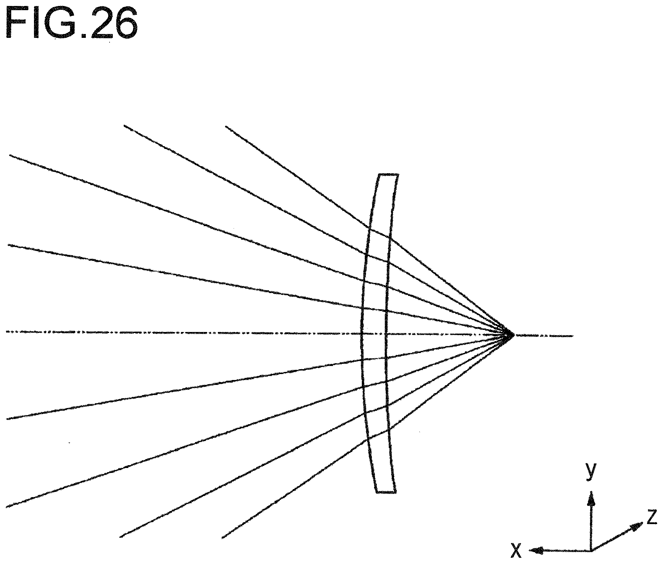

Practical Example 3 uses a progressive power lens for the spectacle lens. FIGS. 24 and 25 show the content of lens shape basic data stored. FIG. 25 shows amounts in sag indicating differences of points on the lens from corresponding points on a mother spherical surface to define the shape of the surface of the progressive power portion. FIG. 17 shows the content of lens shape basic data stored. The transmitted light beam information is obtained by reproducing the lens and the center of rotation using the lens shape basic data shown in FIGS. 24 and 25 and creating a light beam that passes the center of rotation (FIG. 26).

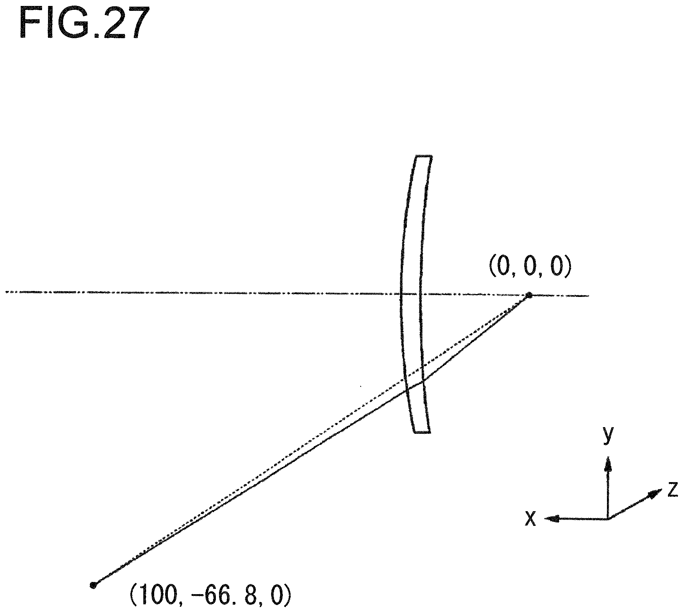

FIG. 27 exemplifies a practical example in which data is obtained at a pitch of 5mm within the range of (y, z) = (20, -5) to (y, z) = (-20, -5). If needed, this range may be expanded or a smaller pitch than 5 mm may be used.

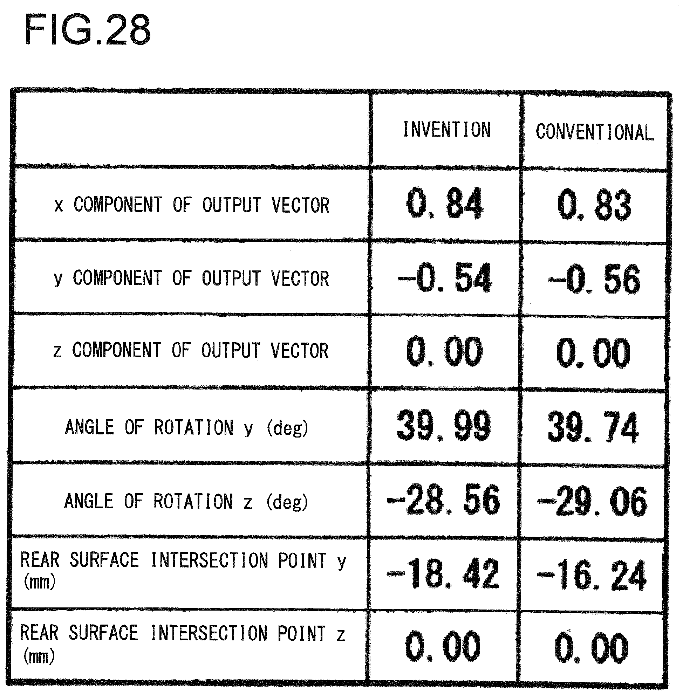

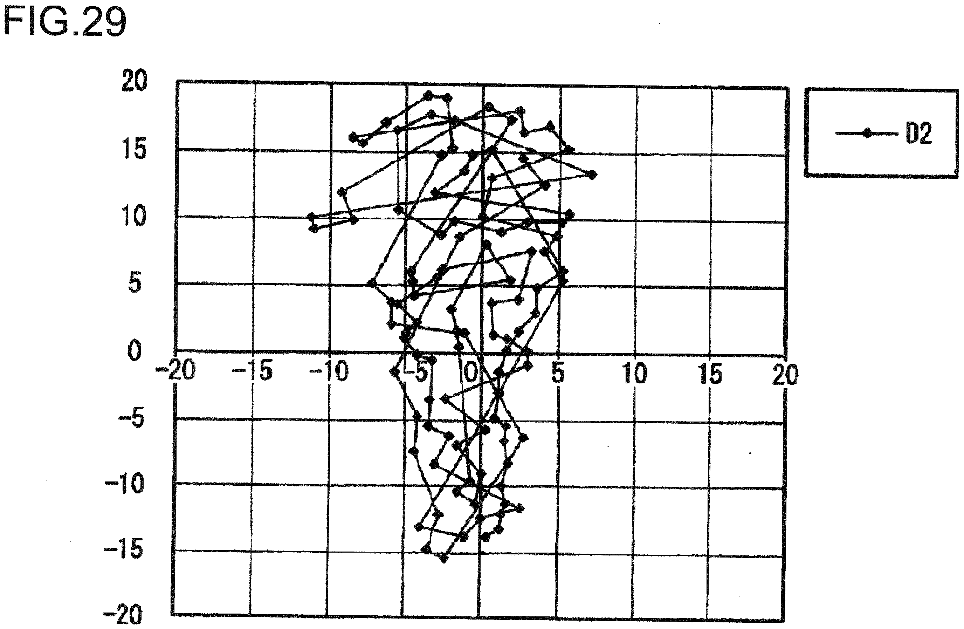

The gaze point obtained using the line of sight detection device 100, which is at the coordinates of (100, -50, 0) from the origin, which is the point of rotation, is corrected as follows. The light beam that passes the center of rotation is refracted by the lens, and then passes the gaze point is as shown in FIG. 28. Based on this light beam, the values as shown in FIG. 29 are obtained. The values, which are obtained using the line of sight detection device 100, are also shown side by side. The differences between the corrected values obtained according to the invention and the values obtained using the line of sight detection device 100 are apparent, which indicates that the present invention has great effect.

Practical Example 4:

Practical Example 4 explains an example in which the area of use of the line of sight of a subject on the lens is obtained using data relating to a corrected angle of rotation of eyeball and an intersection of an optical instrument with the line of sight.

Three candidate lenses A, B, and C of different types are provided. These lenses have different distances of fitting points whose astigmatism measured in the horizontal direction exceeds 1.0 Dpt. For instance, the lens A has a distance of 3 mm, the lens B 6 mm, and the lens C 15 mm.

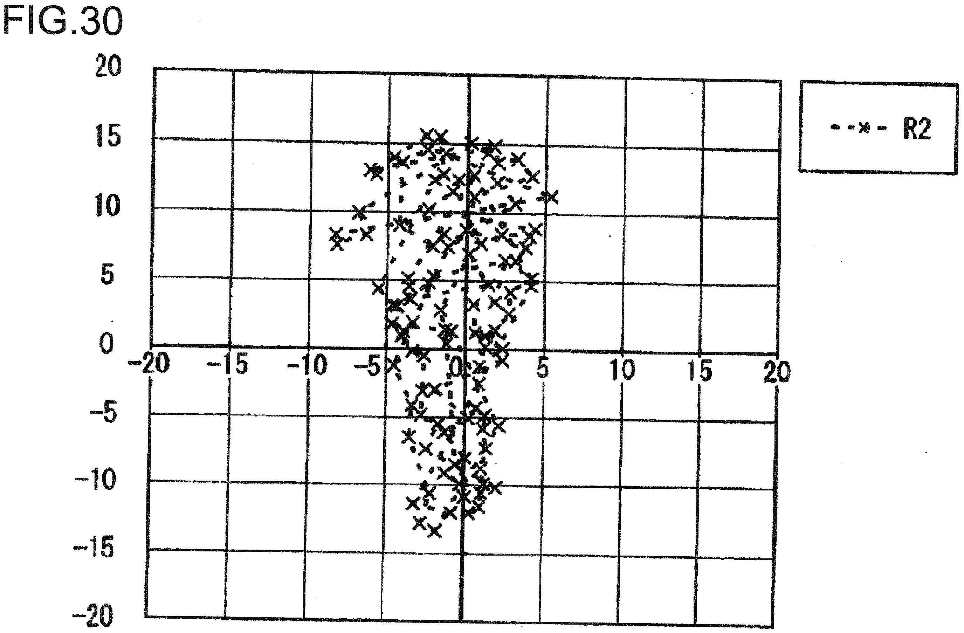

The area of use calculated from the corrected line of sight information of the subject is, as shown, for instance, in FIG. 30, 5 mm from the fitting point in the horizontal direction. When the subject wears the lens A, the line of sight passes a region having 1.0 Dpt or more where seeing is very difficult, and he feels discomfort. Thus, further selection is made to select one of the lenses B and C.

In this case, the subject feels no discomfort when he wears the lens C, which, however, may be said to be over corrected for the subject who has the above defined distance of the fitting point of 5 mm. Consequently, the lens B has a higher priority than the lens C. The lens A is ill-fitting. The conventional line of sight information detection unit provides an area of use calculated based on the corrected line of sight information of, for instance, 7 mm in the horizontal direction of the fitting points as shown in FIG. 31. In this case, the lenses A and B are ill-fitting and only the lens C is fitting. As a result, the overcorrected lens shall be selected with there being no choice. Thus, the result is different with or without correction of the line of sight information.

Embodiment of the present invention:

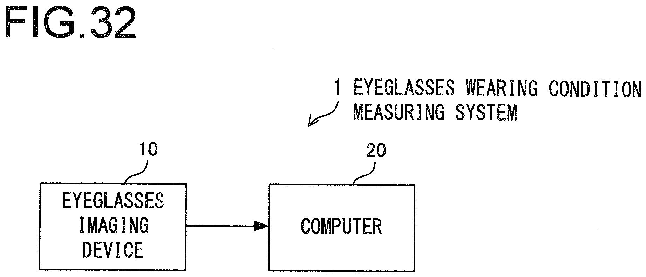

Referring to the drawings, an embodiment of the present invention is explained below. FIG. 32 is a diagram schematically illustrating an eyeglasses wearing condition measuring system 1 according to an embodiment of the present invention. The eyeglasses wearing condition measuring system 1 includes an eyeglasses imaging (shooting) device 10 and a computer 20. The eyeglasses imaging device 10 is attached to the head of a subject and continuously captures an image of the subject who wears the eyeglasses. The computer 20 measures an amount of change in the position of the eyeglasses based on the images continuously captured by the eyeglasses imaging device 10 to determine a change in the eyeglasses wearing condition of the subject.

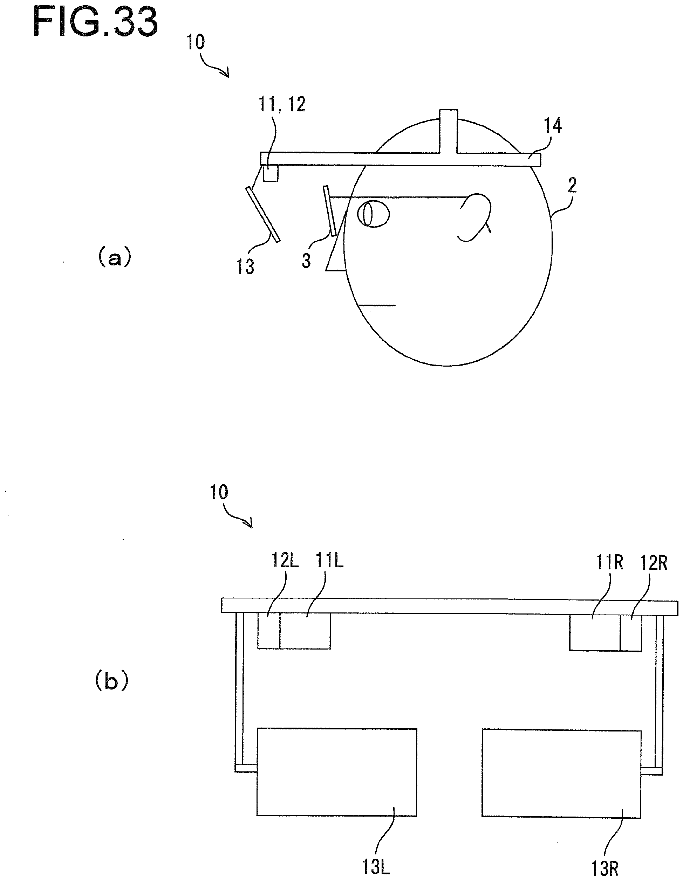

FIG. 33 is a diagram illustrating the components of the eyeglasses imaging device 10. FIG. 33(a) is a diagram illustrating how the eyeglasses imaging device 10 is attached to the head of the subject 2. FIG. 33(b) is a diagram showing the components of the eyeglasses imaging device 10 as seen from the side of the subject 2. As shown in FIG. 33(a), the eyeglasses imaging device 10 includes a camera 11, an infrared light source 12, a dichroic mirror 13, and a headband 14. The eyeglasses imaging device 10 is fixed to the head of the subject 2 with the headband 14. This fixes the relative position of the eyeglasses imaging device 10 to the face of the subject 2.

To the headband 14 are attached the camera 11, the infrared light source 12, and the dichroic mirror 13. Attaching the headband 14 to the head of the subject 2 who wears eyeglasses 3 allows the dichroic mirror 13 to be arranged in front of the eyeglasses 3 and the camera 11 and the infrared light source 12 to be arranged obliquely upward of the eyeglasses 3.

As shown in FIG. 33(b), the camera 11 includes a left side camera 11L that captures an image of a left eye side surround and a right side camera 11R that captures an image of a right eye side surround of the eyeglasses 3. The infrared light source 12 includes a left side infrared light source 12L that illuminates the left eye side surround of the eyeglasses 3 and a right side infrared light source 12R that illuminates the right eye side surround of the eyeglasses 3. The dichroic mirror 13 includes a left side dichroic mirror 13L arranged in front of the eyeglasses 3 on the left eye side and a right side dichroic mirror 13R arranged in front of the eyeglasses 3 on the right eye side.

The dichroic mirror 13L reflects infrared light and transmits visible light. This allows the subject 2 to have a free front sight through the eyeglasses 3 and the dichroic mirror 13 with the headband 14 on him.

The infrared light irradiated from the infrared light source 12 reflects on the dichroic mirror 13 to illuminate the eyeglasses 3. The camera 11 continuously captures an image of the eyeglasses 3 illuminated with the infrared light.

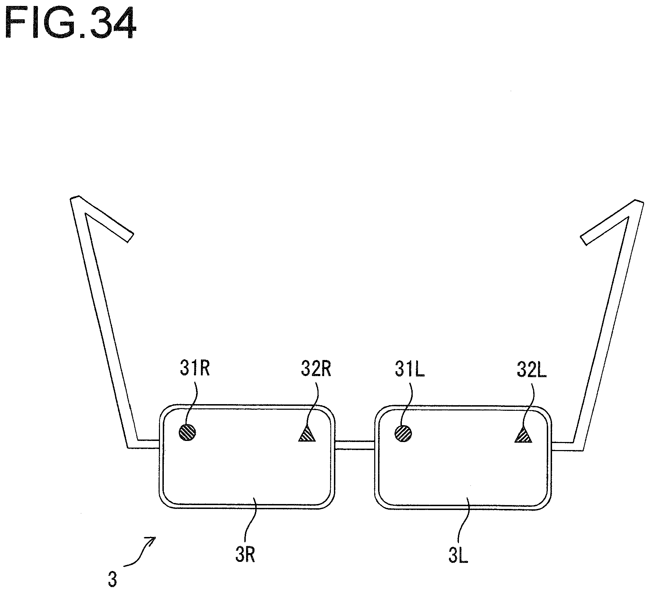

The eyeglasses 3 the subject wears has, as shown in FIG. 34, two marks made in advance on each of the spectacle lenses 3L and 3R, i.e., the spectacle lens 3L has marks 31L and 32L and the spectacle lens 3R has marks 31R and 32R. Consequently, the camera 11 captures images of the spectacle lenses 3L and 3R together with the marks 31L, 32L, 31R, and 32R.The marks 31L, 32L, 31R, and 32R have a size that does not hinder the vision of the subject.

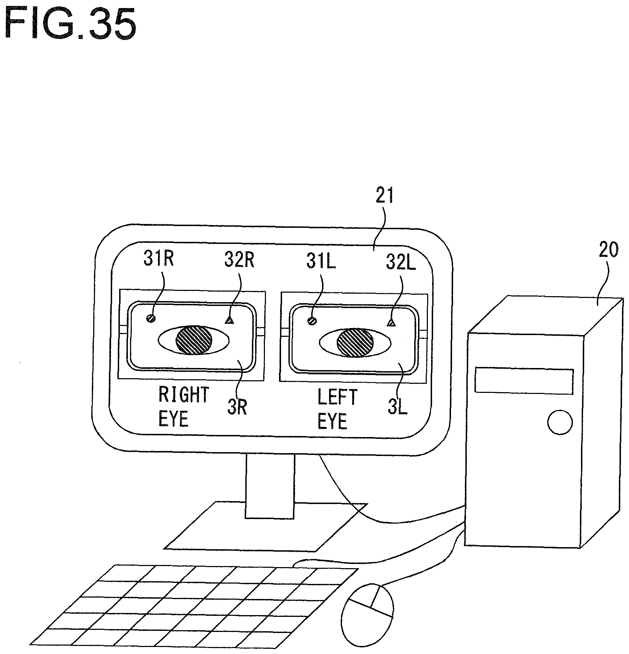

The images of the eyeglasses continuously captured by the camera 11 are input into the computer 20. For instance, as shown in FIG. 35, the computer 20 displays each of the captured images of the left eye side and the right eye side of the eyeglasses on a monitor 21. Also, the computer 20 calculates positions the marks 31L, 32L, 31R, and 32R with respect to the reference coordinates O for each of the continuously captured images of the eyeglasses and stores them in a recording medium (unshown) in the computer. The computer 20 obtains an amount of change in the position of the eyeglasses based on the amount of change in the position of the marks 31L, 32L, 31R, and 32R.

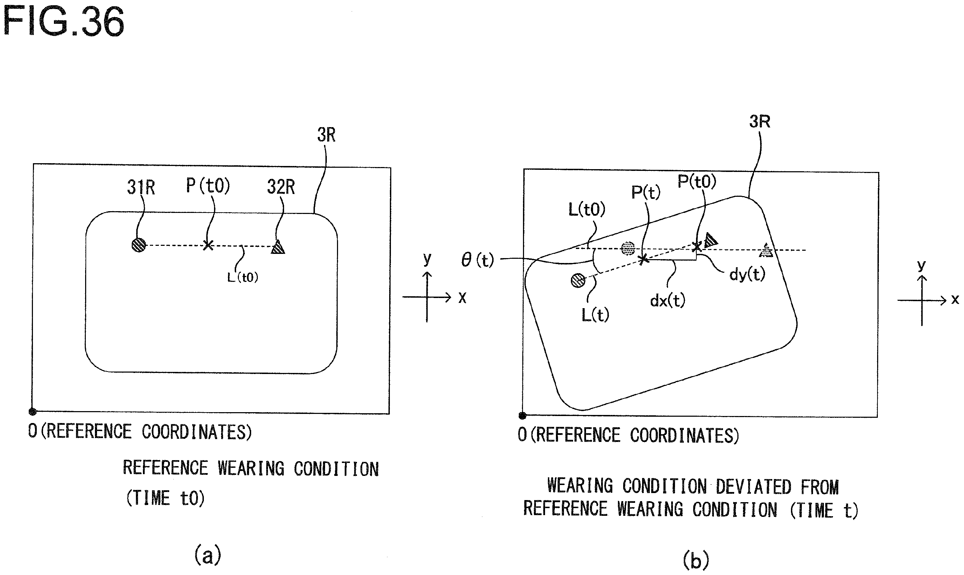

In this embodiment, the computer calculates an amount of parallel displacement of the eyeglasses and an amount of rotation of the eyeglasses about a virtual axis along the front-back direction. An example of this calculation is explained referring to FIG. 36. FIG. 36(a) shows a captured image of the eyeglasses on the right eye side at time t and FIG. 36(b) shows a captured image of the eyeglasses on the right eye side at time t. Although these captured images also show the eye of the subject and the frame of the eyeglasses, these are omitted in FIG. 36.

The condition in which the subject wears the eyeglasses at time t is used as a reference wearing condition. At time t, the wearing condition changes from the reference wearing condition to some extent and the position of the eyeglasses changes.

The reference coordinates O is supposed to be set at the left under corner of the image as shown in FIGS. 36(a) and 36(b). The x direction of the image is a horizontal direction on in the sheet of the drawing in FIGS. 36(a) and 36(b), and the y direction of the image is a vertical direction on the sheet of the drawing in FIGS. 36(a) and 36(b). The marks 31R and 32R have coordinates at time t0 of $(x1(t0), y1(t0))$ and $(x2(t0), y2(t0))$, respectively, and coordinates at time t of $(x1(t), y1(t))$ and $(x2(t), y2(t))$, respectively. The amount of the dislocation of the midpoint P of the line segment connecting the mark 31R with the mark 32R from time t0 to time t is supposed to be $dx(t)$ and $dy(t)$ in the x and y directions, respectively. In addition, the angle formed by the line segment $L(t0)$, which connects the mark 31R and the mark 32R at time t0, and the line segment $L(t)$, which connects the mark 31R and the mark 32R at time t is supposed to be $\theta(t)$.

Then, the position of the eyeglasses at time t for the reference wearing condition at time t0 corresponds to a position obtained by rotating the image by an angle of $\theta(t)$ centered on the midpoint $P(t0)$ between the mark 31R and the mark 32R in the reference wearing condition of the eyeglasses about an axis in the front-back direction with respect to the eyeglasses and parallelly displaced by dx(t) in the x direction and by dy(t) in the y direction. That is, from time t0 to time t, the amount of rotation is the angle $\theta$(t) and the amounts of parallel displacements in the x and y directions of the eyeglasses are dx(t) and dy(t), respectively.

To calculate the angle $\theta$(t), first, the inclination $\Delta$(t0) of the line segment L(t0) and the inclination $\Delta$(t) of the line segment L(t) are calculated according to the formulas (1) and (2) below.

$$\Delta(t0) = (y2(t0) - y1(t0)) / (x2(t0) - x1(t0)) \qquad \ldots (1)$$

$$\Delta(t) = (y2(t) - y1(t)) / (x2(t) - x1(t)) \qquad \ldots (2)$$

Subsequently, the angle $\theta$(t) is calculated according to formula (3) using the inclination $\Delta$(t0) and $\Delta$(t).

$$\theta(t) = \arctan(\Delta(t)) - \arctan(\Delta(t0)) \qquad \ldots (3)$$

The dx(t) and dy(t) are calculated according to the formulas (4) and (5) below, respectively.

$$dx(t) = \{(x1(t) + x2(t)) - (x1(t0) + x2(t0))\} / 2 \qquad \ldots (4)$$

$$dy(t) = \{(y1(t) + y2(t)) - (y1(t0) + y2(t0))\} / 2 \qquad \ldots (5)$$

Although the calculation using the captured image of the right eye side of the eyeglasses has been explained above, calculation using the captured image of the left eye side of the eyeglasses is made similarly and explanation of this case is omitted.

In this manner, the computer 20 continuously calculates amount of changes of the position of the eyeglasses (i.e., amounts of parallel displacements dx(t) and dy(t), respectively and angle of rotation $\theta$(t)) to enable continuous measurement of changes in the wearing condition of the eyeglasses when the subject is moving.

The result of measurement by the eyeglasses wearing condition measuring system 1 can be used, for instance, in determining as to whether the frame of the eyeglasses the subject wears fits to him. In this case, during the imaging by the eyeglasses imaging device 10, the subject is requested to freely move supposing that he wears eyeglasses. For instance, for a subject who wears eyeglasses during his running, he is requested to run during imaging by the eyeglasses imaging device 10.

If the result of the measurement by the eyeglasses wearing condition measuring system 1 indicates a large amount of change in the position of the eyeglasses, it is highly possible that the subject may have moved to displace the eyeglasses, which indicates that the frame of the eyeglasses is ill-fitting to the subject. Consequently, if the amount of change in the position of the eyeglasses is equal to or larger than a predetermined threshold value, the nose pad may be adjusted or the frame of the eyeglasses may be exchanged to make the frame more fitting.

The result of the measurement by the eyeglasses wearing condition measuring system 1 can be used in selecting a frame to be purchased from a plurality of types of frames of eyeglasses. In this case, the eyeglasses wearing condition measuring system 1 measures each of the plurality of types of frames of eyeglasses and the frame that gives the smallest change in the amount of change in the position of the eyeglasses is selected as the frame to be purchased.

The embodiment described above provides the operation and advantageous effects as described below.

The eyeglasses wearing condition measuring system 1 includes the eyeglasses imaging device 10 that continuously captures images of the eyeglasses 3 the subject 2 wears, the computer 20 that continuously extracts the marks 31L, 32L, 31R, and 32R made on the lenses of the eyeglasses 3 from the image captured by the eyeglasses imaging device 10, and the computer 20 that calculates amounts of changes of the positions of the extracted marks 31L, 32L, 31R, and 32R and calculates based on these amounts of change an amount of change in the position of the eyeglasses 3.This configuration enables measurement of a change in the wearing condition of the eyeglasses 3 in a condition in which the subject 2 who wears the eyeglasses 3. That is, based on these amounts of change, judgment can be made as to whether the spectacle lens or eyeglasses frame fits to the subject. Also, judgment can be made as to whether the spectacle lens or eyeglasses frame fits to the subject based on the amounts of parallel displacement calculated (measured) as the amount of change and angle of rotation (measured value).

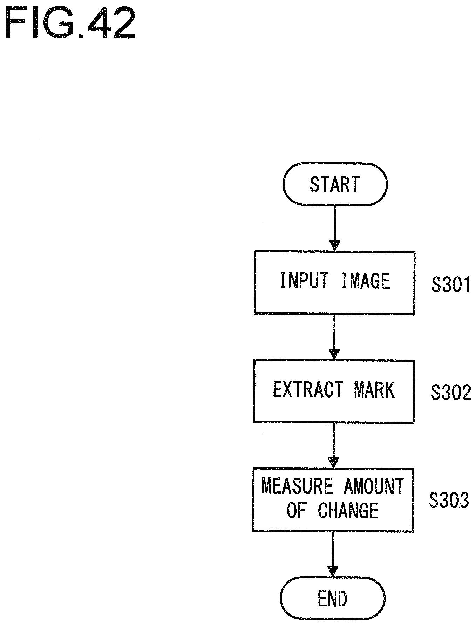

The computer 20 executes a predetermined program to perform the processing described above. FIG. 42 is a flowchart illustrating the program. In step S301, the computer 20 inputs images of the eyeglasses 3 the subject 2 wears continuously captured by the camera 11 of the eyeglasses imaging device 10. In step S302, the computer 20 continuously extracts the 31L, 32L, 31R, and 32R made on the lenses of the eyeglasses 3 from the input images. In step S303, the computer 20 calculates amounts of changes in the positions of the extracted marks 31L, 32L, 31R, and 32R and measures based on these amounts of changes an amount of change in the position of the eyeglasses 3.

Like FIG. 41 illustrating the example, the program the computer 20 executes can be provided to the computer 20 as a computer readable program product in various forms such as a recording medium or data signals.

Variation Example 1:

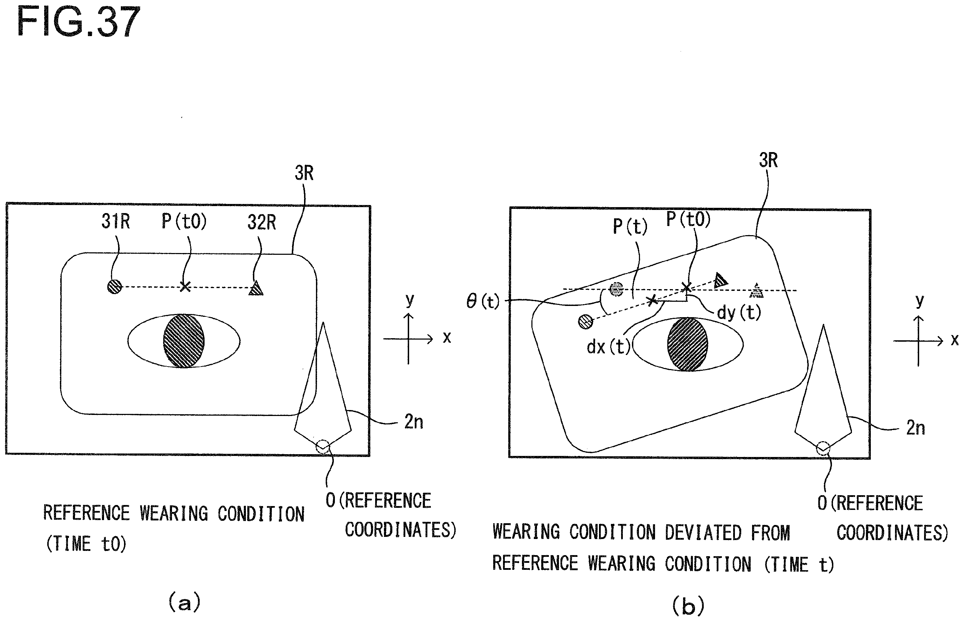

The amount of change in the position of the eyeglasses may be obtained from the relative positional relationship between the two marks made on each of the spectacle lenses and a feature point of a portion of the face of the subject. In this case, the eyeglasses imaging device 10 captures an image of a portion of the face of the subject together with the eyeglasses. FIG. 37 shows an example of the captured image captured by the eyeglasses imaging device 10. FIG. 37(a) shows a captured image of the right eye side at time t0 and FIG. 37(b) shows a captured image of the right eye side at time t. Here, explanation is made on an example in which the nose 2n of the subject is set as a feature point. The computer 20 extracts the marks 31R and 32R and also the above set feature points from the captured images at time t0 and time t, respectively, and then calculates the positional coordinates of the marks 31R and 32R taking the position of the feature point as the reference coordinates O. The computer 20, like the above described embodiment, calculates the amount of rotation $\theta(t)$ and amounts of parallel displacements $dx(t)$ and $dy(t)$ from the positional coordinates of the marks 31R and 32R at time t0 and time t, respectively. Although the calculation using the captured image of the right eye side of the eyeglasses has been explained above, calculation using the captured image of the left eye side of the eyeglasses is made similarly and explanation of this case is omitted.

Variation Example 1 enables one to obtain an amount of change in the relative position of the eyeglasses with respect to the face of the subject. Thus, it enables measurement of an amount of change in the position of the eyeglasses if the headband 14 moves to displace the relative position of the eyeglasses imaging device 10 without being affected by this displacement.

Variation Example 2:

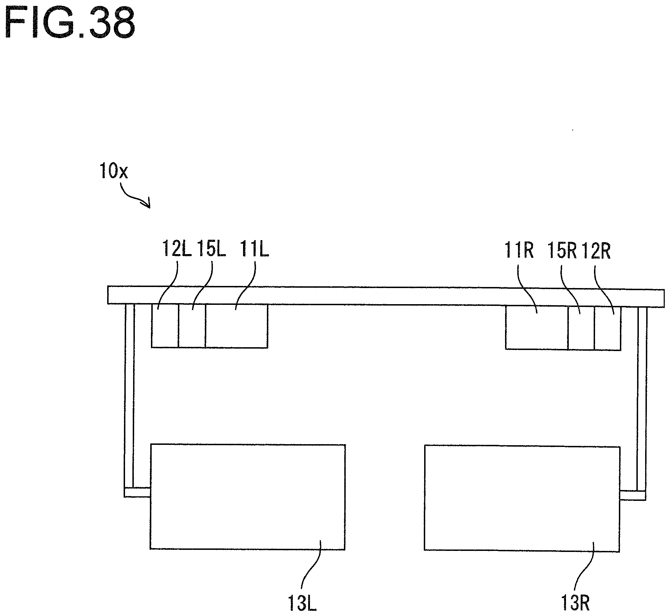

The eyeglasses imaging device 10 may include a line of sight detection unit. FIG. 38 is a diagram showing the components of an eyeglasses imaging device 10X according to Variation Example 2. The eyeglasses imaging device 10X includes, in addition to the components of the eyeglasses imaging device 10, a left eye line of sight detection unit 15L that detects the line of sight of the left eye and a right eye line of sight detection unit 15R that detects the line of sight of the right eye. The left and right line of sight detection units 15L and 15R may be replaced by the conventional line of sight detection device 100. As such a line of sight detection device 100, for instance, a line of sight detection device 100 can be used that captures an image of the eyeball irradiated by infrared light and based on the captured image of the eyeball, calculates eyeball movement data, such as the positional coordinates of the center of pupil and the positional coordinates of the reflection point of cornea, and detects the direction of line of sight based on the eyeball movement data. The eyeglasses imaging device 10X with the line of sight information detection unit 15 enables measurement of an amount of change in the position of the eyeglasses and detection of the line of sight.

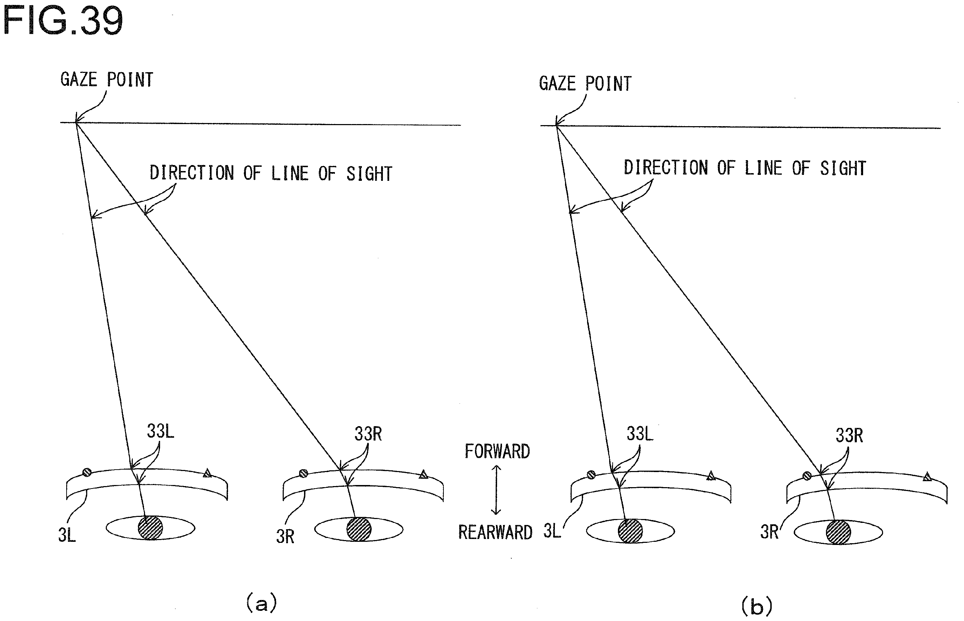

FIG. 39 is a diagram illustrates points (transmission points) 33L and 33R at which the lines of sight of the subject transmit through the spectacle lenses 3L and 3R, respectively, with the spectacle lenses 3L and 3R being seen from above. FIG. 39(a) and (b) shows the spectacle lenses 3L and 3R arranged at different positions with respect to the eyeballs, though the lines of sight are the same. As shown in FIG. 39(a) and (b), the spectacle lenses 3L and 3R arranged at different positions have different transmission points 33L and 33R, respectively. In addition, if the positions of the spectacle lenses 3L and 33R are the same, different lines of sight pass the lenses at different transmission points 33L and 33R. Since the position of transmission points 33L and 33R depends on the position of the spectacle lenses 3L and 3R and the direction of the lines of sight as stated above, the positions of the transmission points 33L and 33R can be obtained from the amounts of change in the position of the spectacle lenses 3L and 3R (i.e., amount of change in the position of the eyeglasses) and the direction of the line of sight.

Accordingly, the left eye line of sight detection unit 15L and the right eye line of sight detection unit 15R (also referred to as "line of sight detection unit 15, collectively) in the eyeglasses wearing condition measuring system 1 of Variation Example 2 continuously detects the direction of line of sight during capturing images of the eyeglasses by the camera 11 and outputs the result of the detection to the computer 20. The computer 20 continuously calculates the position of the transmission points 33L and 33R based on the direction of line of sight detected by the line of sight detection unit 15 and the image captured by the camera 11. As the transmission points 33L and 33R, one or both of the positions of the front surface and the rear surface may be obtained.

The result of measurement of transmission point by the eyeglasses wearing condition measuring system 1 may be used, for instance, upon designing or selecting a progressive power lens. The progressive power spectacle lens has set in it a region for distance vision, a region for reading for near vision and a progressive power region connecting the regions for distance vision and near vision. For instance, suppose a case in which the eyeglasses imaging device 10X performs image capturing under the conditions in which the subject who wears a progressive power spectacle lens sees distance to measure the position of the transmission points. If the dioptric power at the position of the transmission point deviates from a predetermined dioptric power at the region for distance vision, it may be judged that he progressive spectacle lens the subject wears is ill-fitting to him. On the other hand, suppose a case in which the eyeglasses imaging device 10X performs image capturing under the conditions in which the subject who wears a progressive power spectacle lens sees a near point to measure the position of the transmission points. If the dioptric power at the position of the transmission point deviates from a predetermined dioptric power at the region for near vision, it may be judged that he progressive spectacle lens the subject wears is ill-fitting to him. As stated above, if the progressive power spectacle lens is judged to be ill-fitting to the subject, another progressive power spectacle lens may be selected or the design of the progressive power spectacle lens may be changed.

The calibration of the line of sight detection by the left eye line of sight detection unit 15L and the right eye line of sight detection unit 15R may be performed for each of a plurality of different wearing conditions of the same eyeglasses. For instance, after calibration is performed in an eyeglass wearing condition, which is a reference, calibrations are performed in a wearing condition in which the position of the eyeglasses is deviated to some extent from the reference wearing condition of the eyeglasses. The result of each calibration is related to the position of the mark of the eyeglasses corresponding to each of the wearing conditions and stored in the memory device in the computer 20. In these calibrations, the subject is requested to gaze at several specified points and the direction of line of sight corresponding to each of the specified points is detected.

In actual measurements, the computer 20 selects, from the results of the calibration in the wearing conditions stored in the memory device, the result of calibration on the wearing condition in which the position of the mark of the spectacle lens is closest from the position of the mark of the spectacle lens obtained from the image captured by the eyeglasses imaging device 10. This enables selection of the result of calibration in the eyeglasses wearing condition closest to the eyeglasses wearing condition upon measuring. Then, the computer 20 corrects the detected direction of the line of sight detected by the left eye line of sight detection unit 15L and the right eye line of sight detection unit 15R based on the selected result of calibration.

The calibration of the detection of line of sight in each of the wearing conditions of the same eyeglasses enables increase in the precision of the detection of the direction of line of sight, which in turn enables increase in the precision of calculation of transmission points of the line of sight on the spectacle lens using the results of the detection of the line of sight.

Variation Example 3:

The explained example in the above-mentioned embodiment calculates amounts of change in position of the eyeglasses using two marks made on each of the left and right spectacle lenses. However, the invention is not limited to use of two marks.

For instance, a configuration may be adopted in which a mark having a shape that allows determination of an amount of rotation (i.e., a shape that lacks rotation symmetry) is made on the spectacle lens at a single position and the amount of parallel displacement and amount of rotation of the position of the eyeglasses is calculated from the amount of parallel displacement and amount of rotation of the mark. For instance, if a mark of rotation symmetry is made, such a mark is made on each of the left and right spectacle lenses at a single position, and the amount of parallel displacement and amount of rotation of the position of the eyeglasses may be calculated from the amount of parallel displacement and the amount of rotation of the mark. That is, for any mark of rotation symmetry, marks are made in at least two positions for the left and right spectacle lenses in combination (i.e., for a pair of lenses of the eyeglasses).

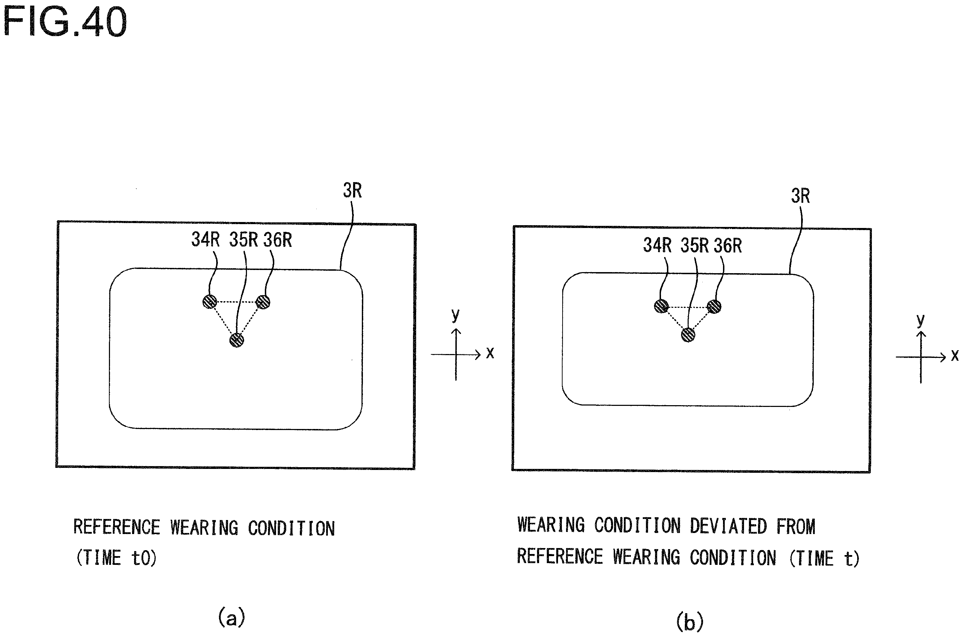

The marks may be attached in at least three positions for each of the left and right spectacle lenses. FIG. 40 is a diagram illustrating an example of the captured image of the eyeglasses in such a case. FIG. 40(a) shows the captured image of the eyeglasses on the right eye side at time t0 and FIG. 40(b) shows the captured image of the eyeglasses on the right eye side at time t. For any inclination of the eyeglasses about x axis (i.e., horizontal direction) as the axis of rotation from time t0 to time t, the height in the y direction of a triangle obtained by connecting marks 34R to 36R at time t is shorter than at time t0 as shown in FIGS. 40(a) and 40(b). This enables the computer 20 to calculate an amount of rotation (i.e., amount of rotation in the tilt direction about x axis (i.e., horizontal direction) as the axis of rotation based on the amount of deformation of the triangle obtained by connecting the marks 34R to 36R. Similarly, this enables the computer 20 to calculate an amount of rotation of the eyeglasses about y axis (i.e., vertical direction) as the axis of rotation. The amounts of parallel displacement and of rotation of the eyeglasses about an axis in the vertical direction can be calculated from the amount of change in the position of the marks 34R to 36R in the same manner as that in the above-mentioned embodiment. Although the calculation using the captured image of the right eye side of the eyeglasses has been explained above, calculation using the captured image of the left eye side of the eyeglasses is made similarly and explanation of this case is omitted.

The three marks made on the spectacle lens enable calculation of the amounts of parallel displacement and of rotation about an axis in the front-back direction and also amounts of rotation in the horizontal direction and in the vertical direction. In this case, the computer 20 may be configured to calculate both of the amounts of rotation about axes in the horizontal and vertical directions, respectively, or to calculate either one of such. The invention is not limited to use of 3 marks. The marks may be made in at least 3 positions in total for the left and right spectacle lenses in combination (i.e., for a pair of lenses of the eyeglasses).

To obtain the amounts of rotation of the position of the eyeglasses in the horizontal direction and in the vertical direction, the mark need to be made at least three positions for any mark that is a small point. For any mark having a shape that allows calculation of amounts of rotation of the eyeglasses in the horizontal direction and in the vertical direction (for instance, having a triangular shape), the mark may be made in a single position. Smaller marks are more preferred since such less hinders vision.

Variation Example 4:

The above-mentioned embodiment attaches one or more marks for obtaining an amount of change in the position of the eyeglasses on the spectacle lens. However, such a mark may be made on the frame of the eyeglasses.

The amount of change in the position of the eyeglasses may be calculated based on the contour of the lens of the eyeglasses or the contour of the frame. In this case, an image of the eyeglasses in a reference condition of wearing eyeglasses is captured in advance. The computer 20 extracts a contour of the lens of the eyeglasses or of the frame from the captured image and stores the data of the extracted contour of the spectacle lens or frame in the memory device in the computer 20. In actual measurements, the computer 20 calculates the amounts of change (amounts of parallel displacement and of rotation) in the position of the contour of the lens of or frame of the eyeglasses based on the data of the contour stored in advance in the memory device and based on the amounts of change, the computer 20 calculates amounts of change in the position of the eyeglasses in the manner similar to that in the above-mentioned embodiment.

Variation Example 5:

The eyeglasses imaging device 10 in the above-mentioned embodiment is fixed to the head of the subject. However, the relative position of the eyeglasses imaging device 10 with respect to the face of the subject may be fixed by a method other than that method used in the above-mentioned embodiment.

Variation Example 6:

The above-mentioned embodiment calculates both the amounts of parallel displacement and of rotation about an axis in the front-back direction of the eyeglasses based on the amounts of change in the positions of the two marks made on the spectacle lens. However, either one of the amounts of parallel displacement or of rotation about an axis in the front-back direction of the eyeglasses based on the amounts of change in the positions of the two marks made on the spectacle lens.

The above explanations is exemplary and the present invention is not limited to the configuration of the above-mentioned embodiments. The above-mentioned embodiments may be combined with the configuration of each of the variation examples as appropriate.

REFERENCE SIGNS LIST

1 ... eyeglass wearing condition measurement system; 2 ... subject; 3 ...eyeglasses; 10, 10X. .. eyeglasses imaging device; 11... camera; 12... infrared light source; 13... dichroic mirror; 15... line of sight information detection unit; 20 ... computer; CONT ... control device; PR ... processing unit; CM ... communication unit; MR ... memory unit; 100, 101 ... line of sight information detection device; L, 16 ... spectacle lens; 200 ... line of sight information correction device; 201 ... main unit; 202 ... input unit; 203 ... output unit; 301 ... communication line; 302 ... computer; 303 ... hard disk drive; 304 ... CD-ROM; 400 ... line of sight information correction system

**Claims**

1. A measurement system (1), **characterized by** comprising:

    an image-capturing unit (11) that is fixed to the head of a subject (2) and continuously captures an image of eyeglasses the subject (2) wears;
    an extraction unit (20) that continuously extracts a mark (31L, 31R, 32L, 32R) made on a lens or a frame of the eyeglasses or a contour of the lens or the frame of the eyeglasses from the image captured by the image-capturing unit (11); and
    an amount of change measurement unit (20) that calculates an amount of change in position of the mark (31L, 31R, 32L, 32R) or the contour extracted by the extraction unit (20) in the image and, based on the calculated amount of change, measures an amount of change in position of the eyeglasses to measure a change in the wearing condition of the subject (2) wearing the eyeglasses.

2. The measurement system (1) according to claim 1, wherein:
    the image-capturing unit (11) has a relative position with respect to a face of the subject that is fixed.

3. The measurement system (1) according to claim 1 or 2, wherein:

    a pair of lenses or a frame of the eyeglasses has at least two marks (31L, 31R, 32L, 32R); and
    the amount of change measurement unit (20) measures at least one of an amount of parallel displacement and an amount of rotation about an axis in a front-back direction based on an amount of change in position of the at least two marks (31L, 31R, 32L, 32R).

4. The measurement system (1) according to any one of claims 1 to 3, further comprising:
    a line of sight detection unit (15L, 15R) that detects a direction of line of sight of the subject (2).

5. The measurement system (1) according to claim 4, further comprising:
    a transmission point detection unit (20) that detects a position of a transmission point through which the line of sight of the subject transmits at the lens of the eyeglasses, based on the amount of change in position of the eyeglasses measured by the amount of change measurement unit (20) and the direction of the line of sight of the subject (2) detected by the line of sight detection unit (15L, 15R).

6. The measurement system (1) according to claim 4 or 5, further comprising:

    a calibration unit (20) that performs calibration of the line of sight detection unit (15L, 15R) for each of a plurality of different wearing conditions of the same eyeglasses; and
    a correction unit (20) that selects a result of calibration performed in a wearing condition corresponding to the amount of change in position of the eyeglasses measured by the amount of change measurement unit (20) from results of calibration performed in the plurality of different wearing conditions, and based on the selected result of calibration corrects the direction of line of sight of the subject (2) detected by the line of sight detection unit (15L, 15R).

7. The measurement system (1) according to any one of claims 1 to 6, wherein:

    the image-capturing unit (11) continuously captures an image of the eyeglasses and a portion of the face of the subject (2);
    the extraction unit (20) continuously extracts the mark (31L, 31R, 32L, 32R) made on the lens or frame of the eyeglasses or the contour of the lens or frame of the eyeglasses, and a feature point of the portion of the face from the image captured by the image-capturing unit (11); and
    the amount of change measurement unit (20) calculates an amount of change in relative position of the mark (31L, 31R, 32L, 32R) or contour with respect to the feature point extracted by the extraction unit (20) and measures based on this amount of change an amount of change in relative position of the eyeglasses with respect to the portion of the face.

8. The measurement system (1) according to any one of claims 1 to 7, wherein:

    the pair of lenses or the frame of the eyeglasses has at least three marks;

the amount of change measurement unit (20) measures an amount of rotation about at least one of axes in a horizontal direction or a vertical direction of the eyeglasses based on amounts of changes in positions of the at least three marks.

9. A measurement method, **characterized by** comprising:

an image-capturing step of continuously capturing an image of eyeglasses a subject (2) wears by an image-capturing unit (11) that is fixed to the head of the subject (2);
an extraction step of continuously extracting a mark (31L, 31R, 32L, 32R) made on a lens or a frame of the eyeglasses or a contour of the lens or the frame of the eyeglasses from the image captured in the image-capturing step; and
an amount of change measurement step of calculating an amount of change in position of the mark (31L, 31R, 32L, 32R) or the contour extracted in the extraction step in the image and measuring an amount of change in position of the eyeglasses based on the calculated amount of change to measure a change in the wearing condition of the subject (2) wearing the eyeglasses.

10. The measurement method according to claim 9, further comprising:
a line of sight detection step of detecting a direction of a line of sight of the subject (2).

11. The measurement method according to claim 10, further comprising:
a transmission point detection step of detecting a transmission point through which the line of sight of the subject (2) transmits at the lens of the eyeglasses based on the amount of change in position of the eyeglasses measured in the amount of change measurement step and the direction of line of sight of the subject (2) detected in the line of sight detection step.

12. The measurement method according to claim 10 or 11, further comprising:

a calibration step of calibrating line of sight detection in the line of sight detection step for each of a plurality of different wearing conditions of the same eyeglasses; and
a correction step of selecting a result of calibration performed in a wearing condition corresponding to the amount of change in position of the eyeglasses measured in the amount of change measurement step from results of calibration performed in the calibration step in the plurality of different wearing conditions, and based on the selected result of calibration, correcting the direction of line of sight of the subject (2) detected in the line of sight detection step.

13. A spectacle lens design method, comprising:
designing a spectacle lens based on the position of the transmission point obtained by the measurement system (1) according to claim 5.

14. A spectacle lens selection method comprising:
selecting a spectacle lens based on the position of the transmission point obtained by the measurement system (1) according to claim 5.

15. A spectacle lens manufacturing method comprising:
manufacturing a spectacle lens based on the position of the transmission point obtained by the measurement system (1) according to claim 5.

**Patentansprüche**

1. Messsystem (1), **dadurch gekennzeichnet, dass** es aufweist:

eine Bilderfassungseinheit (11), die am Kopf eines Subjekts (2) befestigt ist und kontinuierlich ein Bild einer Brille, die das Subjekt (2) trägt, erfasst;
eine Extraktionseinheit (20), die kontinuierlich eine Markierung (31L, 31R, 32L, 32R), die auf einem Brillenglas oder einem Rahmen der Brille oder einer Kontur des Brillenglases oder des Rahmens der Brille gebildet ist, aus dem von der Bilderfassungseinheit (11) erfassten Bild extrahiert, und
eine Änderungsbetragmesseinheit (20), die einen Betrag einer Änderung einer Position der Markierung (31L, 31R, 32L, 32R) oder der von der Extraktionseinheit (20) extrahierten Kontur im Bild berechnet und, basierend auf dem berechneten Änderungsbetrag, einen Betrag einer Änderung einer Position der Brille misst, um eine Änderung des Tragezustands des die Brille tragenden Subjekts (2) zu messen.

2. Messsystem (1) nach Anspruch 1, wobei:
   die Bilderfassungseinheit (11) eine relative Position in Bezug auf ein Gesicht des Subjekts aufweist, die festgelegt ist.

3. Messsystem (1) nach Anspruch 1 oder 2, wobei:

   ein Paar von Brillengläsern oder ein Rahmen der Brille wenigstens zwei Markierungen (31L, 31R, 32L, 32R) aufweist und
   die Änderungsbetragmesseinheit (20) wenigstens einen von einem Betrag einer Parallelverschiebung und einem Betrag einer Drehung um eine Achse in einer Vorwärts-Rückwärts-Richtung basierend auf einem Betrag einer Änderung einer Position der wenigstens zwei Markierungen (31L, 31R, 32L, 32R) misst.

4. Messsystem (1) nach einem der Ansprüche 1 bis 3, ferner aufweisend:
   eine Sichtliniendetektionseinheit (15L, 15R), die eine Richtung einer Sichtlinie des Subjekts (2) detektiert.

5. Messsystem (1) nach Anspruch 4, ferner aufweisend:
   eine Übertragungspunktdetektionseinheit (20), die eine Position eines Übertragungspunktes, durch den die Sichtlinie des Subjekts an dem Brillenglas hindurchgeht, basierend auf dem von der Änderungsbetragmesseinheit (20) gemessenen Betrag einer Änderung einer Position der Brille und der von der Sichtliniendetektionseinheit (15L, 15R) detektierten Richtung der Sichtlinie des Subjekts (2) detektiert.

6. Messsystem (1) nach Anspruch 4 oder 5, ferner aufweisend:

   eine Kalibrierungseinheit (20), die eine Kalibrierung der Sichtliniendetektionseinheit (15L, 15R) für jeden von mehreren unterschiedlichen Tragezuständen derselben Brille durchführt, und
   eine Korrektureinheit (20), die ein Ergebnis einer Kalibrierung, die in einem Tragezustand durchgeführt wird, der zu dem Betrag einer von der Änderungsbetragmesseinheit (20) gemessenen Änderung einer Position der Brille korrespondiert, aus Ergebnissen einer Kalibrierung, die in den mehreren verschiedenen Tragezuständen durchgeführt wird, auswählt und basierend auf dem ausgewählten Kalibrierungsergebnis die von der Sichtliniendetektionseinheit (15L, 15R) detektierte Richtung einer Sichtlinie des Subjekts (2) korrigiert.

7. Messsystem (1) nach einem der Ansprüche 1 bis 6, wobei:

   die Bilderfassungseinheit (11) kontinuierlich ein Bild der Brille und eines Abschnitts des Gesichts des Subjekts (2) erfasst,
   die Extraktionseinheit (20) kontinuierlich die Markierung (31L, 31R, 32L, 32R), die auf dem Brillenglas oder dem Rahmen der Brille oder der Kontur des Brillenglases oder des Rahmens der Brille hergestellt ist, und einen Merkmalspunkt des Gesichtsabschnitts aus dem von der Bilderfassungseinheit (11) erfassten Bild extrahiert und
   die Änderungsbetragmesseinheit (20) einen Betrag einer Änderung einer relativen Position der Markierung (31L, 31R, 32L, 32R) oder einer Kontur in Bezug auf den durch die Extraktionseinheit (20) extrahierten Merkmalspunkt berechnet und basierend auf diesem Änderungsbetrag einen Betrag einer Änderung einer relativen Position der Brille in Bezug auf den Gesichtsabschnitt misst.

8. Messsystem (1) nach einem der Ansprüche 1 bis 7, wobei:

   das Paar von Brillengläsern oder der Rahmen der Brille wenigstens drei Markierungen aufweist,
   die Änderungsbetragmesseinheit (20) einen Betrag einer Drehung um wenigstens eine von Achsen in einer horizontalen Richtung oder einer vertikalen Richtung der Brille basierend auf Beträgen von Änderungen von Positionen der wenigstens drei Markierungen misst.

9. Messverfahren, **dadurch gekennzeichnet, dass** es aufweist:

   einen Bilderfassungsschritt zum kontinuierlichen Erfassen eines Bildes einer Brille, die ein Subjekt (2) trägt, durch eine Bilderfassungseinheit (11), die an dem Kopf des Subjekts (2) befestigt ist,
   einen Extraktionsschritt zum kontinuierlichen Extrahieren einer Markierung (31L, 31R, 32L, 32R), die auf einem Brillenglas oder einem Rahmen der Brille oder einer Kontur des Brillenglases oder des Rahmens der Brille gebildet ist, aus dem in dem Bilderfassungsschritt erfassten Bild und

einen Änderungsbetragsmessschritt, bei dem ein Betrag einer Änderung einer Position der Markierung (31L, 31R, 32L, 32R) oder der im Extraktionsschritt extrahierten Kontur im Bild berechnet wird und ein Betrag einer Änderung einer Position der Brille basierend auf dem berechneten Änderungsbetrag gemessen wird, um eine Änderung des Tragezustands des die Brille tragenden Subjekts (2) zu messen.

10. Messverfahren nach Anspruch 9, ferner aufweisend:
einen Sichtliniendetektionsschritt zum Detektieren einer Richtung einer Sichtlinie des Subjekts (2).

11. Messverfahren nach Anspruch 10, ferner aufweisend:
einen Übertragungspunktdetektionsschritt zum Detektieren eines Übertragungspunktes, durch den die Sichtlinie des Subjekts (2) am Brillenglas hindurchgeht, basierend auf dem in dem Änderungsbetragsmessschritt gemessenen Betrag einer Änderung einer Position der Brille und der in dem Sichtliniendetektionsschritt detektierten Richtung der Sichtlinie des Subjekts (2).

12. Messverfahren nach Anspruch 10 oder 11, ferner aufweisend:

einen Kalibrierungsschritt zum Kalibrieren einer Sichtliniendetektion in dem Sichtliniendetektionsschritt für jeden von mehreren unterschiedlichen Tragezuständen derselben Brille und

einen Korrekturschritt zum Auswählen eines Ergebnisses einer in einem Tragezustand durchgeführten Kalibrierung, der zu dem in dem Änderungsbetragsmessschritt gemessenen Betrag einer Änderung einer Position der Brille korrespondiert, aus Ergebnissen einer Kalibrierung, die in dem Kalibrierungsschritt in mehreren verschiedenen Tragezuständen durchgeführt wird, und zum Korrigieren der Richtung einer in dem Sichtliniendetektionsschritt detektierten Sichtlinie des Subjekts (2) basierend auf dem ausgewählten Kalibrierungsergebnis.

13. Verfahren zum Entwerfen eines Brillenglases, aufweisend:
Entwerfen eines Brillenglases basierend auf der Position des durch das Messsystem (1) nach Anspruch 5 erhaltenen Übertragungspunktes.

14. Verfahren zum Auswählen eines Brillenglases, aufweisend:
Auswählen eines Brillenglases basierend auf der Position des durch das Messsystem (1) nach Anspruch 5 erhaltenen Übertragungspunktes.

15. Brillenglasherstellungsverfahren, aufweisend:
Herstellen eines Brillenglases basierend auf der Position des durch das Messsystem (1) nach Anspruch 5 erhaltenen Übertragungspunktes.

**Revendications**

1. Système de mesure (1), **caractérisé en ce qu'**il comprend :

une unité de capture d'image (11) qui est fixée sur la tête d'un sujet (2) et qui capture continûment une image des lunettes que le sujet (2) porte ;
une unité d'extraction (20) qui extrait continûment une marque (31L, 31R, 32L, 32R) réalisée sur un verre ou une monture des lunettes ou un contour du verre ou de la monture des lunettes de l'image capturée par l'unité de capture d'image (11) ; et
une unité de mesure de quantité de changement (20) qui calcule une quantité de changement de la position de la marque (31L, 31R, 32L, 32R) ou du contour extrait par l'unité d'extraction (20) dans l'image et, sur la base de la quantité de changement calculée, mesure une quantité de changement de la position des lunettes pour mesurer un changement de la condition de port du sujet (2) portant les lunettes.

2. Système de mesure (1) selon la revendication 1, dans lequel :
l'unité de capture d'image (11) a une position relative par rapport au visage du sujet qui est fixe.

3. Système de mesure (1) selon la revendication 1 ou 2, dans lequel :

une paire de verres ou une monture des lunettes comporte au moins deux marques (31L, 31R, 32L, 32R) ; et l'unité de mesure de quantité de changement (20) mesure au moins l'une d'une quantité de déplacement parallèle et d'une quantité de rotation autour d'un axe dans une direction avant-arrière sur la base d'une quantité de changement de la position desdites au moins deux marques (31L, 31R, 32L, 32R).

**4.** Système de mesure (1) selon l'une quelconque des revendications 1 à 3, comprenant en outre :
une unité de détection de ligne de vision (15L, 15R) qui détecte une direction de la ligne de vision du sujet (2).

**5.** Système de mesure (1) selon la revendication 4, comprenant en outre :
une unité de détection de point de transmission (20) qui détecte une position d'un point de transmission par lequel la ligne de vision du sujet transmet au niveau du verre des lunettes, sur la base de la quantité de changement de la position des lunettes mesurée par l'unité de mesure de quantité de changement (20) et de la direction de la ligne de vision du sujet (2) détectée par l'unité de détection de ligne de vision (15L, 15R).

**6.** Système de mesure (1) selon la revendication 4 ou 5, comprenant en outre :

une unité d'étalonnage (20) qui effectue un étalonnage de l'unité de détection de ligne de vision (15L, 15R) pour chacune d'une pluralité de conditions de port différentes des mêmes lunettes ; et
une unité de correction (20) qui sélectionne un résultat d'un étalonnage effectué dans une condition de port correspondant à la quantité de changement de la position des lunettes mesurée par l'unité de mesure de quantité de changement (20) parmi les résultats d'un étalonnage effectué dans la pluralité de conditions de port différentes, et sur la base du résultat d'étalonnage sélectionné, corrige la direction de la ligne de vision du sujet (2) détectée par l'unité de détection de ligne de vision (15L, 15R).

**7.** Système de mesure (1) selon l'une quelconque des revendications 1 à 6, dans lequel :

l'unité de capture d'image (11) capture continûment une image des lunettes et d'une partie du visage du sujet (2) ;
l'unité d'extraction (20) extrait continûment la marque (31L, 31R, 32L, 32R) réalisée sur le verre ou la monture des lunettes ou le contour du verre ou de la monture des lunettes, et un point de caractéristique de la partie du visage de l'image capturée par l'unité de capture d'image (11) ; et
l'unité de mesure de quantité de changement (20) calcule une quantité de changement de la position relative de la marque (31L, 31R, 32L, 32R) ou du contour par rapport au point de caractéristique extrait par l'unité d'extraction (20) et mesure, sur la base de cette quantité de changement, une quantité de changement de la position relative des lunettes par rapport à la partie du visage.

**8.** Système de mesure (1) selon l'une quelconque des revendications 1 à 7, dans lequel :

la paire de verres ou la monture des lunettes comporte au moins trois marques ;
l'unité de mesure de quantité de changement (20) mesure une quantité de rotation autour d'au moins l'un des axes dans une direction horizontale ou une direction verticale des lunettes sur la base des quantités des changements des positions desdites au moins trois marques.

**9.** Procédé de mesure, **caractérisé en ce qu'**il comprend :

une étape de capture d'image pour capturer continûment une image des lunettes qu'un sujet (2) porte par une unité de capture d'image (11) qui est fixée sur la tête du sujet (2) ;
une étape d'extraction pour extraire continûment une marque (31L, 31R, 32L, 32R) réalisée sur un verre ou une monture des lunettes ou un contour du verre ou de la monture des lunettes de l'image capturée à l'étape de capture d'image ; et
une étape de mesure de quantité de changement pour calculer une quantité de changement de la position de la marque (31L, 31R, 32L, 32R) ou du contour extrait à l'étape d'extraction dans l'image et mesurer une quantité de changement de la position des lunettes sur la base de la quantité de changement calculée pour mesurer un changement de la condition de port du sujet (2) portant les lunettes.

**10.** Procédé de mesure selon la revendication 9, comprenant en outre :
une étape de détection de ligne de vision pour détecter une direction d'une ligne de vision du sujet (2).

**11.** Procédé de mesure selon la revendication 10, comprenant en outre :

une étape de détection de point de transmission pour détecter un point de transmission par lequel la ligne de vision du sujet (2) transmet au niveau du verre des lunettes sur la base de la quantité de changement de la position des lunettes mesurée à l'étape de mesure de quantité de changement et de la direction de la ligne de vision du sujet (2) détectée à l'étape de détection de ligne de vision.

12. Procédé de mesure selon la revendication 10 ou 11, comprenant en outre :

une étape d'étalonnage pour étalonner la détection de ligne de vision à l'étape de détection de ligne de vision pour chacune d'une pluralité de conditions de port différentes des mêmes lunettes ; et

une étape de correction pour sélectionner un résultat d'un étalonnage effectué dans une condition de port correspondant à la quantité de changement de la position des lunettes mesurée à l'étape de mesure de quantité de changement parmi les résultats d'un étalonnage effectué à l'étape d'étalonnage dans la pluralité de conditions de port différentes, et sur la base du résultat d'étalonnage sélectionné, corriger la direction de la ligne de vision du sujet (2) détectée à l'étape de détection de ligne de vision.

13. Procédé de conception de verre de lunettes, comprenant :
la conception d'un verre de lunettes sur la base de la position du point de transmission obtenue par le système de mesure (1) selon la revendication 5.

14. Procédé de sélection de verre de lunettes comprenant :
la sélection d'un verre de lunettes sur la base de la position du point de transmission obtenue par le système de mesure (1) selon la revendication 5.

15. Procédé de fabrication de verre de lunettes comprenant :
la fabrication d'un verre de lunettes sur la base de la position du point de transmission obtenue par le système de mesure (1) selon la revendication 5.

# FIG.1

100

HB

CMR

OL

# FIG.2

# FIG.3

# FIG.4

# FIG.5

# FIG.6

# FIG.7

| ACQUIRE LINE OF SIGHT INFORMATION | STEP 161 |

| INPUT ACQUIRED LINE OF SIGHT INFORMATION | STEP 162 |

| CORRECT LINE OF SIGHT INFORMATION BY REFRACTION OF OPTICAL INSTRUMENT | STEP 163 |

# FIG.8

# FIG.9

LEFT EYE RIGHT EYE

(a)

ACP FRM FRM ACP

NP NP

LEFT EYE RIGHT EYE

(b)

REGION IN WHICH ABERRATION IS LARGE

# FIG.10

```
┌─────────────────────────────────────┐
│   ACQUIRE LINE OF SIGHT INFORMATION  │ ╶╮  STEP 191
└─────────────────────────────────────┘  ╯
                    │
                    ▼
┌─────────────────────────────────────┐
│   INPUT ACQUIRED LINE OF SIGHT       │ ╶╮  STEP 192
│   INFORMATION                        │  ╯
└─────────────────────────────────────┘
                    │
                    ▼
┌─────────────────────────────────────┐
│  CORRECT LINE OF SIGHT INFORMATION   │ ╶╮  STEP 193
│  BY REFRACTION OF OPTICAL INSTRUMENT │  ╯
└─────────────────────────────────────┘
                    │
                    ▼
┌─────────────────────────────────────┐
│  ACQUIRE CORRECTED INTERSECTION      │ ╶╮  STEP 194
│  POINT INFORMATION ON OPTICAL        │  ╯
│  INSTRUMENT AND IDENTIFY AREA OF USE │
└─────────────────────────────────────┘
                    │
                    ▼
┌─────────────────────────────────────┐
│  DESIGN DISTRIBUTION OF ABERRATIONS  │ ╶╮  STEP 195
│  AND SHAPE OF SURFACE REFLECTING     │  ╯
│  AREA OF USE                         │
└─────────────────────────────────────┘
```

# FIG.11

| | |
|---|---|
| ACQUIRE A PLURALITY OF TYPES OF LINE OF SIGHT INFORMATION | STEP 201 |

↓

| | |
|---|---|
| INPUT ACQUIRED LINE OF SIGHT INFORMATION | STEP 202 |

↓

| | |
|---|---|
| CORRECT LINE OF SIGHT INFORMATION BY REFRACTION OF OPTICAL INSTRUMENT | STEP 203 |

↓

| | |
|---|---|
| ACQUIRE CORRECTED INTERSECTION POINT INFORMATION ON OPTICAL INSTRUMENT | STEP 204 |

↓

| | |
|---|---|
| IDENTIFY COMMON AREA OF USE BASED ON CORRECTED INTERSECTION POINT INFORMATION | STEP 205 |

↓

| | |
|---|---|
| DESIGN DISTRIBUTION OF ABERRATIONS AND SHAPE OF SURFACE REFLECTING COMMON AREA OF USE | STEP 206 |

# FIG.12

| | |
|---|---|
| ACQUIRE LINE OF SIGHT INFORMATION | STEP 211 |
| INPUT ACQUIRED LINE OF SIGHT INFORMATION | STEP 212 |
| CORRECT LINE OF SIGHT INFORMATION BASED ON REFRACTION OF OPTICAL INSTRUMENT | STEP 213 |
| ACQUIRE CORRECTED INTERSECTION POINT INFORMATION ON OPTICAL INSTRUMENT AND IDENTIFY AREA OF USE | STEP 214 |
| CALCULATE ABERRATIONS IN AREA OF USE | STEP 215 |
| SELECT LENS BASED ON ABERRATION VALUE | STEP 216 |

# FIG.13

<center>(a)</center>

| | |
|---|---|
| FRONT SURFACE RADIUS OF CURVATURE (mm) | 65 |
| REAR SURFACE RADIUS OF CURVATURE (mm) | 500 |
| LENS THICKNESS (mm) | 7 |
| LENS REFRACTIVE INDEX | 1.6 |
| LENS TILT ANGLE (deg) | 0 |
| LENS WARP ANGLE (deg) | 0 |
| APEX OF CORNEA DISTANCE (mm) | 12 |
| CORNEA- POINT OF ROTATION DISTANCE (mm) | 13 |

<center>(b)</center>

| | |
|---|---|
| FRONT SURFACE RADIUS OF CURVATURE (mm) | 65 |
| PRESCRIBED DIOPTRIC POWER (dpt) | 8.08 |
| LENS THICKNESS (mm) | 7 |
| LENS REFRACTIVE INDEX | 1.6 |
| LENS TILT ANGLE (deg) | 0 |
| LENS WARP ANGLE (deg) | 0 |
| APEX OF CORNEA DISTANCE (mm) | 12 |
| CORNEA- POINT OF ROTATION DISTANCE (mm) | 13 |

EP 2 899 584 B1

# FIG.14

| FRONT SURFACE INTERSECTION POINT (mm) | | OUTPUT VECTOR FROM FRONT SURFACE | | | REAR SURFACE INTERSECTION POINT (mm) | | INPUT VECTOR INTO REAR SURFACE | | |
|---|---|---|---|---|---|---|---|---|---|
| y COORDINATE | z COORDINATE | x COMPONENT | y COMPONENT | z COMPONENT | y COORDINATE | z COORDINATE | x COMPONENT | y COMPONENT | z COMPONENT |
| 20.00 | 0.00 | 0.90 | 0.43 | 0.00 | 18.24 | 0.00 | 0.80 | 0.59 | 0.00 |
| 15.00 | 0.00 | 0.94 | 0.35 | 0.00 | 13.26 | 0.00 | 0.88 | 0.47 | 0.00 |
| 10.00 | 0.00 | 0.97 | 0.25 | 0.00 | 8.64 | 0.00 | 0.94 | 0.33 | 0.00 |
| 5.00 | 0.00 | 0.99 | 0.13 | 0.00 | 4.26 | 0.00 | 0.99 | 0.17 | 0.00 |
| 0.00 | 0.00 | 1.00 | 0.00 | 0.00 | 0.00 | 0.00 | 1.00 | 0.00 | 0.00 |
| −5.00 | 0.00 | 0.99 | −0.13 | 0.00 | −4.26 | 0.00 | 0.99 | −0.17 | 0.00 |
| −10.00 | 0.00 | 0.97 | −0.25 | 0.00 | −8.64 | 0.00 | 0.94 | −0.33 | 0.00 |
| −15.00 | 0.00 | 0.94 | −0.35 | 0.00 | −13.26 | 0.00 | 0.88 | −0.47 | 0.00 |
| −20.00 | 0.00 | 0.90 | −0.43 | 0.00 | −18.24 | 0.00 | 0.80 | −0.59 | 0.00 |

EP 2 899 584 B1

# FIG.15

# FIG.16

(0, 0, 0)

(100, −50, 0)

y

z

x

# FIG.17

| | INVENTION | CONVENTIONAL |
|---|---|---|
| x COMPONENT OF OUTPUT VECTOR | 0.90 | 0.88 |
| y COMPONENT OF OUTPUT VECTOR | −0.43 | −0.48 |
| z COMPONENT OF OUTPUT VECTOR | 0.00 | 0.00 |
| ANGLE OF ROTATION y (deg) | 42.01 | 41.31 |
| ANGLE OF ROTATION z (deg) | −23.47 | −25.51 |
| REAR SURFACE INTERSECTION POINT y (mm) | −18.24 | −12.50 |
| REAR SURFACE INTERSECTION POINT z (mm) | 0.00 | 0.00 |

# FIG.18

(a)

| | |
|---|---|
| FRONT SURFACE RADIUS OF CURVATURE (mm) | 500 |
| REAR SURFACE BASE RADIUS OF CURVATURE (mm) | 100 |
| REAR SURFACE CROSS-RADIUS OF CURVATURE (mm) | 60 |
| ANGLE OF ASTIGMATIC AXIS (deg) | 90 |
| LENS THICKNESS (mm) | 1.1 |
| LENS REFRACTIVE INDEX | 1.6 |
| LENS TILT ANGLE (deg) | 0 |
| LENS WARP ANGLE (deg) | 0 |
| APEX OF CORNEA DISTANCE (mm) | 12 |
| CORNEA- POINT OF ROTATION DISTANCE (mm) | 13 |

(b)

| | |
|---|---|
| FRONT SURFACE RADIUS OF CURVATURE (mm) | 500 |
| PRESCRIBED DIOPTRIC POWER S (dpt) | -4.80 |
| PRESCRIBED DIOPTRIC POWER C (dpt) | -8.08 |
| ANGLE OF ASTIGMATIC AXIS (deg) | 90 |
| LENS THICKNESS (mm) | 1.1 |
| LENS REFRACTIVE INDEX | 1.6 |
| LENS TILT ANGLE (deg) | 0 |
| LENS WARP ANGLE (deg) | 0 |
| APEX OF CORNEA DISTANCE (mm) | 12 |
| CORNEA- POINT OF ROTATION DISTANCE (mm) | 13 |

EP 2 899 584 B1

# FIG.19

| FRONT SURFACE INTERSECTION POINT (mm) | | OUTPUT VECTOR FROM FRONT SURFACE | | | REAR SURFACE INTERSECTION POINT (mm) | | INPUT VECTOR INTO REAR SURFACE | | |
|---|---|---|---|---|---|---|---|---|---|
| y COORDINATE | z COORDINATE | x COMPONENT | y COMPONENT | z COMPONENT | y COORDINATE | z COORDINATE | x COMPONENT | y COMPONENT | z COMPONENT |
| 20.00 | -5.00 | 0.67 | 0.71 | -0.20 | 18.62 | -4.62 | 0.77 | 0.62 | -0.15 |
| 15.00 | -5.00 | 0.79 | 0.57 | -0.21 | 14.17 | -4.70 | 0.85 | 0.50 | -0.17 |
| 10.00 | -5.00 | 0.89 | 0.41 | -0.22 | 9.55 | -4.76 | 0.92 | 0.36 | -0.18 |
| 5.00 | -5.00 | 0.95 | 0.21 | -0.23 | 4.81 | -4.80 | 0.96 | 0.19 | -0.19 |
| 0.00 | -5.00 | 0.97 | 0.00 | -0.23 | 0.00 | -4.81 | 0.98 | 0.00 | -0.19 |
| -5.00 | -5.00 | 0.95 | -0.21 | -0.23 | -4.81 | -4.80 | 0.96 | -0.19 | -0.19 |
| -10.00 | -5.00 | 0.89 | -0.41 | -0.22 | -9.56 | -4.76 | 0.92 | -0.36 | -0.18 |
| -15.00 | -5.00 | 0.79 | -0.57 | -0.21 | -14.17 | -4.70 | 0.85 | -0.50 | -0.17 |
| -20.00 | -5.00 | 0.67 | -0.71 | -0.20 | -18.62 | -4.62 | 0.77 | -0.62 | -0.15 |
| 20.00 | 0.00 | 0.70 | 0.72 | 0.00 | 18.70 | 0.00 | 0.78 | 0.63 | 0.00 |
| 15.00 | 0.00 | 0.81 | 0.58 | 0.00 | 14.23 | 0.00 | 0.86 | 0.51 | 0.00 |
| 10.00 | 0.00 | 0.91 | 0.41 | 0.00 | 9.60 | 0.00 | 0.93 | 0.36 | 0.00 |
| 5.00 | 0.00 | 0.98 | 0.21 | 0.00 | 4.84 | 0.00 | 0.98 | 0.19 | 0.00 |
| 0.00 | 0.00 | 1.00 | 0.00 | 0.00 | 0.00 | 0.00 | 1.00 | 0.00 | 0.00 |
| -5.00 | 0.00 | 0.98 | -0.21 | 0.00 | -4.84 | 0.00 | 0.98 | -0.19 | 0.00 |
| -10.00 | 0.00 | 0.91 | -0.41 | 0.00 | -9.60 | 0.00 | 0.93 | -0.36 | 0.00 |
| -15.00 | 0.00 | 0.81 | -0.58 | 0.00 | -14.23 | 0.00 | 0.86 | -0.51 | 0.00 |
| -20.00 | 0.00 | 0.70 | -0.72 | 0.00 | -18.70 | 0.00 | 0.78 | -0.63 | 0.00 |
| 20.00 | 5.00 | 0.67 | 0.71 | 0.20 | 18.62 | 4.62 | 0.77 | 0.62 | 0.15 |
| 15.00 | 5.00 | 0.79 | 0.57 | 0.21 | 14.17 | 4.70 | 0.85 | 0.50 | 0.17 |
| 10.00 | 5.00 | 0.89 | 0.41 | 0.22 | 9.56 | 4.76 | 0.92 | 0.36 | 0.18 |
| 5.00 | 5.00 | 0.95 | 0.21 | 0.23 | 4.81 | 4.80 | 0.96 | 0.19 | 0.19 |
| 0.00 | 5.00 | 0.97 | 0.00 | 0.23 | 0.00 | 4.81 | 0.98 | 0.00 | 0.19 |
| -5.00 | 5.00 | 0.95 | -0.21 | 0.23 | -4.81 | 4.80 | 0.96 | -0.19 | 0.19 |
| -10.00 | 5.00 | 0.89 | -0.41 | 0.22 | -9.55 | 4.76 | 0.92 | -0.36 | 0.18 |
| -15.00 | 5.00 | 0.79 | -0.57 | 0.21 | -14.17 | 4.70 | 0.85 | -0.50 | 0.17 |
| -20.00 | 5.00 | 0.67 | -0.71 | 0.20 | -18.62 | 4.62 | 0.77 | -0.62 | 0.15 |

# FIG.20

# FIG.21

Z

X

# FIG.22

(0, 0, 0)

y

z

X

(100, −96. 8, 0)

# FIG.23

| | INVENTION | CONVENTIONAL |
|---|---|---|
| x COMPONENT OF OUTPUT VECTOR | 0.70 | 0.72 |
| y COMPONENT OF OUTPUT VECTOR | -0.72 | -0.70 |
| z COMPONENT OF OUTPUT VECTOR | 0.00 | 0.00 |
| ANGLE OF ROTATION y (deg) | 34.82 | 35.70 |
| ANGLE OF ROTATION z (deg) | -35.70 | -34.81 |
| REAR SURFACE INTERSECTION POINT y (mm) | -18.70 | -22.48 |
| REAR SURFACE INTERSECTION POINT z (mm) | 0.00 | 0.00 |

# FIG.24

| FRONT SURFACE RADIUS OF CURVATURE (mm) | 154 |
|---|---|
| REAR SURFACE BASE RADIUS OF CURVATURE (mm) | 150 |
| REAR SURFACE CROSS-RADIUS OF CURVATURE (mm) | 150 |
| ANGLE OF ASTIGMATIC AXIS (deg) | 0 |
| LENS THICKNESS (mm) | 3.6 |
| LENS REFRACTIVE INDEX | 1.66 |
| ADDITION (dpt) | 2.00 |
| PROGRESSIVE ZONE LENGTH (mm) | 12 |
| INSET ANGLE | 9.7 |
| LENS TILT ANGLE (deg) | 0 |
| LENS WARP ANGLE (deg) | 0 |
| APEX OF CORNEA DISTANCE (mm) | 12 |
| CORNEA- POINT OF ROTATION DISTANCE (mm) | 13 |

| FRONT SURFACE RADIUS OF CURVATURE (mm) | 154 |
|---|---|
| PRESCRIBED DIOPTRIC POWER S (dpt) | -0.07 |
| PRESCRIBED DIOPTRIC POWER C (dpt) | -0.07 |
| ANGLE OF ASTIGMATIC AXIS (deg) | 0 |
| LENS THICKNESS (mm) | 3.6 |
| LENS REFRACTIVE INDEX | 1.66 |
| ADDITION (dpt) | 2.00 |
| PROGRESSIVE ZONE LENGTH (mm) | 12 |
| INSET ANGLE | 9.7 |
| LENS TILT ANGLE (deg) | 0 |
| LENS WARP ANGLE (deg) | 0 |
| APEX OF CORNEA DISTANCE (mm) | 12 |
| CORNEA- POINT OF ROTATION DISTANCE (mm) | 13 |

NOSE SIDE ◄——— ———► EAR SIDE

| (mm) | -30 | -25 | -20 | -15 | -10 | -5 | 0 | 5 | 10 | 15 | 20 | 25 | 30 |
|---|---|---|---|---|---|---|---|---|---|---|---|---|---|
| -30 | | | | | | | 1.22 | | | | | | |
| -25 | | | | 1.12 | 0.95 | 0.82 | 0.78 | 0.83 | 0.98 | 1.18 | | | |
| -20 | | | 0.91 | 0.76 | 0.60 | 0.48 | 0.43 | 0.49 | 0.63 | 0.82 | 1.03 | | |
| -15 | | 0.74 | 0.62 | 0.49 | 0.35 | 0.24 | 0.20 | 0.25 | 0.38 | 0.55 | 0.73 | 0.92 | |
| -5 | | 0.50 | 0.40 | 0.29 | 0.19 | 0.10 | 0.07 | 0.11 | 0.21 | 0.34 | 0.50 | 0.66 | |
| -10 | | 0.33 | 0.24 | 0.16 | 0.08 | 0.03 | 0.01 | 0.03 | 0.10 | 0.20 | 0.32 | 0.45 | |
| 0 | 0.29 | 0.21 | 0.14 | 0.08 | 0.03 | 0.01 | 0.00 | 0.01 | 0.04 | 0.11 | 0.20 | 0.31 | 0.43 |
| 5 | | 0.15 | 0.09 | 0.05 | 0.02 | 0.01 | 0.00 | 0.01 | 0.02 | 0.06 | 0.12 | 0.21 | |
| 10 | | 0.11 | 0.07 | 0.04 | 0.02 | 0.01 | 0.01 | 0.01 | 0.02 | 0.05 | 0.09 | 0.15 | |
| 15 | | 0.10 | 0.07 | 0.05 | 0.03 | 0.02 | 0.02 | 0.02 | 0.03 | 0.05 | 0.08 | 0.12 | |
| 20 | | | 0.08 | 0.06 | 0.05 | 0.04 | 0.04 | 0.04 | 0.05 | 0.06 | 0.08 | | |
| 25 | | | | 0.07 | 0.06 | 0.06 | 0.06 | 0.06 | 0.07 | 0.08 | | | |
| 30 | | | | | | | 0.08 | | | | | | |

EP 2 899 584 B1

# FIG.25

| FRONT SURFACE INTERSECTION POINT (mm) | | OUTPUT VECTOR FROM FRONT SURFACE | | | REAR SURFACE INTERSECTION POINT (mm) | | INPUT VECTOR INTO REAR SURFACE | | |
|---|---|---|---|---|---|---|---|---|---|
| y COORDINATE | z COORDINATE | x COMPONENT | y COMPONENT | z COMPONENT | y COORDINATE | z COORDINATE | x COMPONENT | y COMPONENT | z COMPONENT |
| 20.00 | -5.00 | 0.81 | 0.56 | -0.14 | 18.29 | -4.58 | 0.79 | 0.59 | -0.15 |
| 15.00 | -5.00 | 0.88 | 0.45 | -0.15 | 13.60 | -4.54 | 0.86 | 0.48 | -0.16 |
| 10.00 | -5.00 | 0.93 | 0.32 | -0.16 | 9.00 | -4.51 | 0.93 | 0.34 | -0.17 |
| 5.00 | -5.00 | 0.97 | 0.17 | -0.16 | 4.48 | -4.49 | 0.97 | 0.17 | -0.17 |
| 0.00 | -5.00 | 0.99 | 0.00 | -0.16 | 0.00 | -4.48 | 0.98 | 0.00 | -0.18 |
| -5.00 | -5.00 | 0.97 | -0.16 | -0.16 | -4.48 | -4.49 | 0.97 | -0.17 | -0.17 |
| -10.00 | -5.00 | 0.94 | -0.31 | -0.15 | -9.02 | -4.52 | 0.93 | -0.34 | -0.17 |
| -15.00 | -5.00 | 0.89 | -0.44 | -0.14 | -13.66 | -4.56 | 0.86 | -0.48 | -0.16 |
| -20.00 | -5.00 | 0.83 | -0.54 | -0.13 | -18.45 | -4.62 | 0.79 | -0.60 | -0.15 |
| 20.00 | 0.00 | 0.82 | 0.57 | 0.00 | 18.27 | 0.00 | 0.80 | 0.60 | 0.00 |
| 15.00 | 0.00 | 0.89 | 0.46 | 0.00 | 13.58 | 0.00 | 0.88 | 0.48 | 0.00 |
| 10.00 | 0.00 | 0.95 | 0.32 | 0.00 | 8.99 | 0.00 | 0.94 | 0.34 | 0.00 |
| 5.00 | 0.00 | 0.99 | 0.17 | 0.00 | 4.47 | 0.00 | 0.98 | 0.18 | 0.00 |
| 0.00 | 0.00 | 1.00 | 0.00 | 0.00 | 0.00 | 0.00 | 1.00 | 0.00 | 0.00 |
| -5.00 | 0.00 | 0.99 | -0.17 | 0.00 | -4.47 | 0.00 | 0.98 | -0.18 | 0.00 |
| -10.00 | 0.00 | 0.95 | -0.31 | 0.00 | -9.00 | 0.00 | 0.94 | -0.34 | 0.00 |
| -15.00 | 0.00 | 0.90 | -0.44 | 0.00 | -13.63 | 0.00 | 0.87 | -0.48 | 0.00 |
| -20.00 | 0.00 | 0.84 | -0.54 | 0.00 | -18.42 | 0.00 | 0.80 | -0.60 | 0.00 |
| 20.00 | 5.00 | 0.82 | 0.56 | 0.14 | 18.30 | 4.58 | 0.79 | 0.59 | 0.15 |
| 15.00 | 5.00 | 0.88 | 0.45 | 0.151 | 3.60 | 4.54 | 0.86 | 0.48 | 0.16 |
| 10.00 | 5.00 | 0.93 | 0.32 | 0.16 | 9.01 | 4.51 | 0.93 | 0.34 | 0.17 |
| 5.00 | 5.00 | 0.97 | 0.17 | 0.16 | 4.48 | 4.49 | 0.97 | 0.17 | 0.17 |
| 0.00 | 5.00 | 0.99 | 0.00 | 0.16 | 0.00 | 4.48 | 0.98 | 0.00 | 0.18 |
| -5.00 | 5.00 | 0.97 | -0.16 | 0.16 | -4.49 | 4.49 | 0.97 | -0.17 | 0.17 |
| -10.00 | 5.00 | 0.94 | -0.31 | 0.15 | -9.02 | 4.52 | 0.93 | -0.34 | 0.17 |
| -15.00 | 5.00 | 0.89 | -0.44 | 0.14 | -13.67 | 4.57 | 0.86 | -0.48 | 0.16 |
| -20.00 | 5.00 | 0.83 | -0.54 | 0.13 | -18.47 | 4.63 | 0.79 | -0.60 | 0.15 |

FIG.26

# FIG.27

(0, 0, 0)

y

z

X

(100, −66. 8, 0)

# FIG.28

|  | INVENTION | CONVENTIONAL |
|---|---|---|
| x COMPONENT OF OUTPUT VECTOR | 0.84 | 0.83 |
| y COMPONENT OF OUTPUT VECTOR | -0.54 | -0.56 |
| z COMPONENT OF OUTPUT VECTOR | 0.00 | 0.00 |
| ANGLE OF ROTATION y (deg) | 39.99 | 39.74 |
| ANGLE OF ROTATION z (deg) | -28.56 | -29.06 |
| REAR SURFACE INTERSECTION POINT y (mm) | -18.42 | -16.24 |
| REAR SURFACE INTERSECTION POINT z (mm) | 0.00 | 0.00 |

# FIG.29

EP 2 899 584 B1

FIG.30

FIG.31

# FIG.32

1 EYEGLASSES WEARING CONDITION MEASURING SYSTEM

```
   10                          20
┌──────────┐            ┌──────────┐
│EYEGLASSES│            │          │
│ IMAGING  │───────────▶│ COMPUTER │
│  DEVICE  │            │          │
└──────────┘            └──────────┘
```

# FIG.33

(a)

(b)

# FIG.34

# FIG.35

# FIG.36

REFERENCE WEARING CONDITION
(TIME t0)

(a)

WEARING CONDITION DEVIATED FROM
REFERENCE WEARING CONDITION (TIME t)

(b)

EP 2 899 584 B1

# FIG.37

REFERENCE WEARING CONDITION
(TIME t0)

(a)

WEARING CONDITION DEVIATED FROM
REFERENCE WEARING CONDITION (TIME t)

(b)

EP 2 899 584 B1

# FIG.38

# FIG.39

(a)

(b)

EP 2 899 584 B1

# FIG.40

REFERENCE WEARING CONDITION
(TIME t0)

(a)

WEARING CONDITION DEVIATED FROM
REFERENCE WEARING CONDITION (TIME t)

(b)

# FIG.41

303 302 301 200 304

# FIG.42

```
         ┌─────────┐
         │  START  │
         └────┬────┘
              │
              ▼
    ┌──────────────────┐
    │   INPUT  IMAGE   │   S301
    └────────┬─────────┘
             │
             ▼
    ┌──────────────────┐
    │  EXTRACT  MARK   │   S302
    └────────┬─────────┘
             │
             ▼
    ┌──────────────────┐
    │ MEASURE  AMOUNT  │   S303
    │    OF  CHANGE    │
    └────────┬─────────┘
             │
             ▼
         ┌─────────┐
         │   END   │
         └─────────┘
```

# FIG.43

400

100

200

LINE OF SIGHT
DETECTION DEVICE

LINE OF SIGHT
INFORMATION
CORRECTION DEVICE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011007269 A
- US 2004189935 A
- EP 2340760 A

- JP H0653107 B
- JP H1066678 B
- JP 2010266892 A

**Non-patent literature cited in the description**

- *Journal of the Eye,* 2007, vol. 24 (9